# EUROPÄISCHE PATENTSCHRIFT

(11) **EP 3 100 929 B1**
(45) Veröffentlichungstag und Bekanntmachung des Hinweises auf die Patenterteilung: **31.07.2019**
(21) Anmeldenummer: 16172718.5
(22) Anmeldetag: 02.06.2016
(51) Int. Cl.: B61D 17/22

(54) **SEITENWANDVERKLEIDUNG**
SIDE WALL CLADDING
REVETEMENT DE PAROI LATERALE

(30) Priorität: 02.06.2015 AT 5010615 U
(43) Veröffentlichungstag der Anmeldung: 07.12.2016
(73) Patentinhaber: ULTIMATE Europe Transportation Equipment GmbH, 3300 Amstetten (AT); Teufl, Manfred, 3332 Rosenau (AT)
(72) Erfinder: Teufl, Manfred, 3332 Rosenau (AT); Haider, Franz, 3364 Neuhofen/Ybbs (AT)
(74) Vertreter: KLIMENT & HENHAPEL

(56) Entgegenhaltungen:
- EP-A1- 0 625 459
- EP-A1- 2 149 462
- EP-A1- 2 565 098
- US-A1- 2015 101 505

## Beschreibung

### GEBIET DER ERFINDUNG

Die Erfindung betrifft eine Seitenwandverkleidung für die Innenseite eines Übergangs zwischen zwei gelenkig miteinander verbundenen Fahrzeugteilen, die Seitenwandverkleidung umfassend,
einen flexiblen, wölbbaren Mittelteil,
eine erste Halterung, welche um eine erste Schwenkachse schwenkbar an zumindest eine erste Befestigungskonsole angebunden ist,
eine zweite Halterung, welche um eine zweite Schwenkachse schwenkbar an zumindest eine zweite Befestigungskonsole angebunden ist,
wobei der flexible Mittelteil zwischen der ersten und der zweiten Halterung angeordnet ist und mit seinen der ersten und zweiten Halterung zuweisenden Endbereichen an die erste und zweite Halterung angebunden ist.

### STAND DER TECHNIK

Übergänge zwischen zwei gelenkig miteinander verbundenen Fahrzeugteilen, etwa Wagenkästen, werden unter anderem bei mehrteiligen Personentransportfahrzeugen, beispielsweise bei Bussen oder Schienenfahrzeugen, eingesetzt, um den Durchtritt von Personen von einem Fahrzeugteil in das andere Fahrzeugteil zu ermöglichen. Gegenüber der Umgebung ist der Übergang in der Regel durch einen die beiden Fahrzeugteile verbindenden Faltenbalg abgeschirmt, der eine Relativbewegung, etwa eine Nick-, Wank- oder Schwenkbewegung bzw. einen Horizontal- oder Vertikalverssatz, zwischen den Fahrzeugteilen zulässt. Ebenso umfasst der Übergang ein Bodenelement, etwa einen Brückenplattenboden, und ein Deckenelement, die den Innenraum des Übergangs nach oben bzw. unten begrenzen, sodass die beförderten Personen den Faltenbalg nicht beschädigen können. An den Seitenwänden des Innenraums des Übergangs ist jeweils eine Seitenwandverkleidung angebracht, sodass in der Regel der Faltenbalg vom Innenraum des Übergangs nicht mehr oder nur in geringem Umfang zugänglich ist. Gleichzeitig erfüllt die Seitenwandverkleidung auch optische Zwecke, um die Übergänge optisch aufzuwerten.

Bei Schwenkbewegungen zwischen den Fahrzeugteilen, wie sie in der Regel bei Kurvenfahrten auftreten, vergrößert sich der Abstand der Fahrzeugteile auf der Kurvenaußenseite, während sich der sich Abstand der Fahrzeugteile auf der Kurveninnenseite verringert. Damit Seitenwandverkleidungen diese Betriebsbelastungen aufnehmen können und dabei gleichzeitig die Abdeckung der Innenwände des Übergangs gewährleisten, sind gemäß dem Stand der Technik verschiedene Ausführungen bekannt, etwa mehrteilige Schiebeelemente, die gegeneinander verschoben werden, oder zwei Aufrollelemente, von denen jeweils ein flexibles Mittelteil auf- oder abgerollt wird. Die EP 0 625 459 A1 zeigt eine Innenverkleidung eines Übergangs, bei dem eine flexibler, in Richtung der Mitte des Übergangs gewölbter, Mittelteil, über Scharniere und Halterungen gelenkig mit den Fahrzeugteilen verbunden ist. Durch die Scharniere sind die Halterungen jeweils um eine Schwenkachse schwenkbar, wobei die Schwenkachsen parallel zueinander, vorzugsweise parallel zu einer Höhenrichtung, verlaufen. Der flexible Mittelteil ist jeweils über ein elastisches Element mit der Halterung verbunden, welches elastische Element sich an einem walzenartigen Radius der Halterung abstützt und sich unter Betriebsbelastung vom Radius ablöst. Durch die Drehung der Halterung um die Scharniere und die Verformung der elastischen Elemente, wird die Längung oder Verkürzung der Seitenwand des Faltenbalgs aufgenommen. Die Wölbung des flexiblen Mittelteils wird durch eine Verspannung mittels eines Seilelements erreicht, wobei durch die Wölbung sichergestellt wird, dass der Mittelteil bei einer Kurvenfahrt tatsächlich in Richtung der Mitte des Übergangs ausbaucht.

Als Nachteil des Stands der Technik kann dabei der ständige Kontakt bzw. die ständigen Relativbewegungen zwischen dem walzenartigen Radius der Halterung und dem elastischen Element angesehen werden, da das elastische Element im Betrieb ständig gestaucht oder gedehnt wird, ist ein erhöhter Verschleiß am elastischen Element feststellbar, welcher zu kurzen Wartungsintervallen führt. Ebenfalls äußert sich die massive Bauweise des elastischen Elements in einem erhöhten Gesamtgewicht, welches sich negativ auf die Montage auswirkt. Nachteilig ist ebenfalls die Tatsache anzusehen, dass zum Austausch des Mittelteils die gesamte Seitenwandverkleidung demontiert werden muss.

Im Hinblick auf den Stand der Technik wird auch auf die US 2015/0101505 verwiesen, welche ebenfalls eine Seitenwandverkleidung für den Übergang zwischen zwei Schienenfahrzeugen offenbart. Dabei ist der flexible Mittelteil fest mit der Halterung verbunden und wird bei einer Kürzung bzw. Längung im Betrieb auf den walzenartigen Radius der Halterung auf- bzw. von diesem abgewickelt. Die beiden Halterungen sind darüberhinaus durch ein Verbindungsgestänge miteinander verbunden.

Die EP 2 149 462 A1 zeigt ein Konzept zur Montage einer Seitenwandverkleidung. Dabei wird ein Fixierabschnitt eines Verbindungselements mit einem Rahmen eines Fahrzeugteils verrastet und mittels eines Fixierelements 6 fixiert. Das Verbindungselement weist auch einen Anschlussabschnitt zur Verbindung mit den Seitenwandverkleidung auf, wobei Anschlussabschnitt und Fixierabschnitt um eine Achse gegeneinander verschwenkbar sind.

### AUFGABE DER ERFINDUNG

Es ist daher eine Aufgabe der Erfindung die Nachteile des Stands der Technik zu überwinden und eine Seitenwandabdeckung vorzuschlagen, die eine verschleißarme Anbindung des Mittelteils an die Halterungen bei gleichzeitiger Reduktion des Gesamtgewichts ermöglicht.

Eine weitere Aufgabe besteht darin, dass der flexible Mittelteil in einfacher Art und Weise austauschbar sein soll, wobei auch eine vereinfachte Montage der Seitenwandverkleidung erreicht werden soll.

Eine weitere Aufgabe der Erfindung ist es den mit dem Schließen bzw. Öffnen der Seitenwandverkleidung bei der Koppelung von Fahrzeugteilen verbunden Aufwand zu reduzieren, um die für das Schließen bzw. Öffnen der Seitenwandverkleidung benötigte Zeit zu verringern.

### DARSTELLUNG DER ERFINDUNG

Diese Aufgaben werden bei einer erfindungsgemäßen Seitenwandverkleidung für die Innenseite eines Übergangs zwischen zwei gelenkig miteinander verbundenen Fahrzeugteilen, die Seitenwandverkleidung umfassend,
- einen flexiblen, wölbbaren Mittelteil,
- eine erste Halterung, welche um eine erste Schwenkachse schwenkbar an zumindest eine erste Befestigungskonsole angebunden ist,
- eine zweite Halterung, welche um eine zweite Schwenkachse schwenkbar an zumindest eine zweite Befestigungskonsole angebunden ist,
wobei der flexible Mittelteil zwischen der ersten und der zweiten Halterung angeordnet ist und mit seinen der ersten und zweiten Halterung zuweisenden Endbereichen an die erste und zweite Halterung angebunden ist, dadurch gelöst, dass die Anbindung des flexiblen Mittelteils an die erste und/oder die zweite Halterung jeweils relativ zur jeweiligen Halterung drehbar ausgebildet ist. Durch die Drehbarkeit des flexiblen Mittelteils relativ zur jeweiligen Halterung wird eine verschleißarme Anbindung des flexiblen Mittelteils erreicht, da bei einer drehbaren Anbindung im Falle einer Schwenkbewegung der Fahrzeugteile, wie sie beispielsweise bei einer Kurvenfahrt auftritt, lediglich der flexible Mittelteil elastisch verformt wird. Die für die Streckung bzw. Kürzung des flexiblen Mittelteils nötige Relativbewegung wird also zum einen durch die Schwenkung der jeweiligen Halterung um die entsprechende Schwenkachse erreicht, zum anderen durch die relativ zur Schwenkung stattfindende Drehung des flexiblen Mittelteils. Es ist denkbar, dass nur der der ersten Halterung zugewandte Endbereich des flexiblen Mittelteils drehbar an die erste Halterung angebunden ist, oder dass nur der der zweiten Halterung zugewandte Endbereich des flexiblen Mittelteils drehbar an die zweite Halterung angebunden ist. Vorteilhaft ist es jedoch, wenn beide Endbereiche drehbar angebunden sind, um eine gleichmäßige Verformung des flexiblen Mittelteils bzw. eine gleichmäßige Gewichtsverteilung zu erreichen.

Eine Ausführungsvariante der erfindungsgemäßen Seitenwandverkleidung sieht vor, dass die Anbindung des flexiblen Mittelteils an die erste Halterung über ein erstes, um eine erste Drehachse verdrehbares Verbindungselement erfolgt. Durch das Vorsehen eines Verbindungselements lässt sich in einfacher Art und Weise die drehbare Anbindung des flexiblen Mittelteils an die erste Halterung bewerkstelligen, da es sich bei dem ersten Verbindungselement um ein Zwischenelement zwischen erster Halterung und flexiblem Mittelteil handelt. Die Drehbarkeit des Verbindungselements um eine definierte Drehachse führt zu einfachen kinematischen Zusammenhängen, aus denen einfach beherrschbare Relativbewegungen resultieren. Die Anbindung des der zweiten Halterung zuweisenden Endbereichs des flexiblen Mittelteils ist dabei sowohl drehbar, als auch drehstarr denkbar.

In einer ersten Ausführungsvariante ist es vorgesehen, dass der flexible Mittelteil an die zweite Halterung drehstarr angebunden ist während die Anbindung an die erste Halterung über das erste Verbindungselement drehbar erfolgt. So lassen sich beispielsweise zwei Fahrzeugteile über eine erfindungsgemäße Seitenwandverkleidung verbinden, wobei die ersten Halterung des ersten Fahrzeugteils über das erste Verbindungselement um die erste Drehachse drehbar mit dem flexiblen Mittelteil verbunden ist, und wobei die zweite Halterung des zweiten Fahrzeugteils nicht für die drehbare Anbindung des flexiblen Mittelteils geeignet ist, also nur eine drehstarre Anbindung des flexiblen Mittelteils möglich ist.

Um eine gleichförmige Verformung der Seitenwandverkleidung im Bereich des flexiblen Mittelteils und eine spiegelsymmetrische Konstruktion zu erreichen, ist in einer zweiten Ausführungsvariante der Erfindung vorgesehen, dass die Anbindung des flexiblen Mittelteils an die zweite Halterung über ein zweites, um eine zweite Drehachse verdrehbares Verbindungselement erfolgt. Die zweite Drehachse als definierter Angelpunkt für die Drehbewegung des flexiblen Mittelteils bedingt ebenfalls einen vereinfachten kinematischen Zusammenhang zwischen der Schwenkung der Halterung um die Schwenkachse, in diesem Fall die zweite Halterung um die zweite Schwenkachse, und der Streckung bzw. Kürzung des flexiblen Mittelteils, bei der jeweiligen Relativbewegung zwischen den Fahrzeugteilen. Um die Drehbarkeit des flexiblen Mittelteils relativ zur ersten bzw. zweiten Halterung um die entsprechende erste bzw. zweite Drehachse zu ermöglichen, weist zumindest eines der Verbindungselemente, vorzugsweise beide Verbindungselemente, beispielsweise Hülsen, Drehgelenke, Drehaugen oder Wälzlager auf.

Besonders einfache kinematische Zusammenhänge bei der Relativbewegung der Fahrzeugteile lassen sich dann erreichen, wenn die erste und/oder die zweite Drehachse parallel verlaufend zur ersten und zweiten Schwenkachse angeordnet sind. Durch die parallele Ausrichtung der ersten und zweiten Schwenkachse und der ersten Drehachse, vorteilhafter Weise verlaufen sowohl die beiden Schwenkachsen als auch die erste und zweite Drehachse parallel zur Hochachse bzw. zur Höhenrichtung, bewegt sich die Drehachse auf einer kreisbogenförmigen Bahn um die Schwenkachse. Wird die erste Halterung aufgrund einer Relativbewegung der Fahrzeugteile, beispielsweise an der Kurvenaußenseite, um die erste Schwenkachse in Richtung des ersten Fahrzeugteils, also nach außen, bewegt, so bewegt sich auch die erste Drehachse nach außen, was zu einer Längung bzw. Dehnung des flexiblen Mittelteils führt. Da der flexible Mittelteil jedoch um die erste Drehachse drehbar angebunden ist, kann sich der flexible Mittelteil durch die Drehung um die erste Drehachse optimal zur zweiten Halterung hin ausrichten. Bei der umgekehrten Relativbewegung, also beim Durchfahren einer Kurve an der Kurveninnenseite, in der die erste Halterung um die erste Schwenkachse vom ersten Fahrzeugteil weg gedrängt wird, also nach innen schwenkt, kommt es zu einer Verkürzung bzw. Stauchung des flexiblen Mittelteils, wobei sich das flexible Mittelteil wiederum durch die drehbare Anbindung optimal gegenüber der zweiten Halterung ausrichtet. Sind beide Halterungen über ein Verbindungselement, also erste Halterung über erstes Verbindungselement und zweite Halterung über zweites Verbindungselement, mit dem flexiblen Mittelteil verbunden, so kommt es bei einer Relativbewegung zwischen den Fahrzeugteilen zwischen den beiden Halterungen und dem flexiblen Mittelteil zu den oben beschriebenen Bewegungen.

Gemäß einer bevorzugten Ausführungsvariante der erfindungsgemäßen Seitenwandverkleidung ist es vorgesehen, dass das erste bzw. das zweite Verbindungselement jeweils einen ersten Verbindungsabschnitt zur Verbindung mit der ersten bzw. zweiten Halterung und einen zweiten Verbindungsabschnitt zur Verbindung mit dem flexiblen Mittelteil aufweist. Da die erfindungsgemäße Lösung der eingangs gestellten Aufgabenstellung bereits mit einem Verbindungselement realisiert werden kann, wie etwa im Zusammenhang mit der ersten Ausführungsvariante erläutert, jedoch die Ausführung mit zwei Verbindungselementen weitere vorteilhafte Effekte mit sich bringt, sind die folgenden bevorzugten Ausführungsvarianten für beide Varianten denkbar.

Die Formulierung "erstes bzw. zweites Verbindungselement" ist dabei so zu verstehen, dass einerseits jene Variante, bei welcher ausschließlich das das erste Verbindungselement vorgesehen ist, umfasst ist und dementsprechend nur die mit dem ersten Verbindungselement in Verbindung stehenden ersten Komponenten, also erste Halterung, erste Drehachse, erste Schwenkachse etc., bzw. die vom ersten Verbindungselement ausgebildeten Elemente gemeint sind. Andererseits umfasst ist aber auch jene Variante, bei der sowohl erstes als auch zweites Verbindungselement vorgesehen sind, und das erste Verbindungselement mit den ersten Komponenten und das zweite Verbindungselement mit den entsprechenden zweiten Komponenten verbunden ist. In den weiteren Ausführungen zu der bevorzugten Ausführungsvariante ist der Begriff "bzw." immer in diesem Zusammenhang zu verstehen, sodass bei der folgenden Erläuterung der Einfachheit halber nicht jedes Mal auf beide Varianten eingegangen wird. Alle im Zusammenhang mit dem ersten Verbindungselement und der ersten Variante beschriebenen Effekte und Ausführungsvarianten gelten also gleichermaßen für das zweite Verbindungselement, sofern die erfindungsgemäße Seitenwandverkleidung in der zweiten Variante ausgebildet ist.

Die beiden Verbindungsabschnitte des ersten Verbindungselements ermöglichen die einfache Anbindung des ersten Verbindungselements sowohl an die erste Halterung als auch an den flexiblen Mittelteil. Vorzugsweise lassen sich beide Verbindungsabschnitt getrennt voneinander verbinden und handelt es sich bei der durch die Verbindungsabschnitte ermöglichten Verbindung jeweils um eine lösbare Verbindung.

Eine weitere bevorzugte Ausführungsvariante der Erfindung sieht vor, dass an der ersten bzw. zweiten Halterung jeweils zumindest ein zylindrisches Aufnahmeelement angeordnet ist, welches die erste bzw. die zweite Drehachse ausbildet. Das zylindrische Aufnahmeelement, welches vorzugsweise einen kreisrunden Querschnitt aufweist, ermöglicht die drehbare Anbindung des ersten Verbindungselements in effizienter Art und Weise. Bei dem Aufnahmeelement kann es sich etwa um eine Stange, einen Bolzen oder ein Rohr handeln, welches die erste Drehachse ausbildet. Es ist dabei denkbar, dass das Aufnahmeelement einteilig ausgebildet ist und sich im Wesentlichen über die gesamte Höhe der ersten Halterung erstreckt. Genauso denkbar ist es aber auch, dass das Aufnahmeelement mehrteilig ausgebildet ist und beispielsweise mehrere Bolzen, die entlang der Drehachse angeordnet sind, umfasst. Sowohl bei der einteiligen als auch bei der mehrteiligen Ausbildung des Aufnahmeelements kann sich das Aufnahmeelement auch nur über einen Teil der Höhe der ersten Halterung erstrecken.

In einer weiteren bevorzugten Ausführungsvariante ist es vorgesehen, dass der erste Verbindungsabschnitt zumindest ein hülsenartiges Führungselement aufweist, welches in Wirkverbindung mit dem zumindest einen Aufnahmeelement steht, um die Verdrehbarkeit des ersten bzw. zweiten Verbindungselementes zu ermöglichen. Die Herstellung der Verdrehbarkeit um die erste bzw. zweite Drehachse mittels zumindest eines hülsenartigen Führungselements, welches beispielsweise auf das Aufnahmeelement aufgeschoben ist, zeichnet sich durch die Verwendung von besonders einfachen Konstruktionselementen zur Herstellung der Wirkverbindung aus.

Um das Aufnahmeelement an der ersten bzw. zweiten Halterung zu befestigen, ist gemäß einer weiteren bevorzugten Ausführungsvariante vorgesehen, dass das Aufnahmeelement über zumindest ein hülsenförmiges Befestigungselement an der ersten bzw. zweiten Halterung befestigt ist. Das zumindest eine hülsenartige Befestigungselement kann dabei beispielsweise entweder kraftschlüssig, etwa über eine Pressverbindung, mit dem Aufnahmeelement verbunden sein. Es ist aber genauso denkbar, dass das Aufnahmeelement mittels Spielpassung im Befestigungselement geführt ist, um das Aufnahmeelement gegenüber der Halterung in radialer Richtung, bezogen auf die Schwenk- bzw. Drehachse, zu fixieren und Haltemittel vorgesehen sind, etwa Sicherungsringe oder Wellenmuttern, die das Aufnahmeelement in axialer Richtung in Position halten.

Wenn der erste Verbindungsabschnitt mehrere hülsenartige Führungselemente aufweist und mehrere hülsenartige Befestigungselemente das Aufnahmeelement an der ersten Halterung fixieren, so ist in einer weiteren Ausführungsvariante der erfindungsgemäßen Seitenwandverkleidung vorgesehen, dass Befestigungselemente und Führungselemente abwechselnd an dem Aufnahmeelement angeordnet sind. So wird das erste Verbindungselement bei der Relativbewegung der Fahrzeugteile gleichmäßig belastet und die durch die Relativbewegung bedingten Kräfte werden in axialer Richtung auf alle Befestigungs- bzw. Führungselemente aufgeteilt, ohne einzelne Bereiche übermäßig zu beanspruchen. Vorteilhaft ist es dabei, wenn die Abstände zwischen benachbarten Befestigungselementen und Führungselementen in etwa gleich groß sind.

Kommt es im Betrieb des Fahrzeugs zu einer Relativbewegung der Fahrzeugteile, die zu einem Vertikalversatz zwischen den beiden Fahrzeugteilen führt, so muss auch dieser Vertikalversatz von der Seitenwandverkleidung aufgenommen werden können. Daher sieht eine weiter bevorzugte Ausführungsvariante der Erfindung vor, das erste bzw. zweite Verbindungselement translatorisch verschiebbar an der ersten bzw. zweiten Halterung angeordnet ist. Durch die Verschiebung des flexiblen Mittelteils relativ zur ersten bzw. zweiten Halterung kann zumindest ein Teil des Vertikalversatzes aufgenommen werden.

Vorteilhaft ist es dabei, wenn die Verschiebung des zumindest einen Führungselements entlang des Aufnahmeelements, also parallel zur ersten bzw. zweiten Drehachse, erfolgt. Das Führungselement, welches ja hülsenförmig das Aufnahmeelement umschließt, stellt dabei eine besonders einfache Möglichkeit dar, die translatorische Verschiebbarkeit herzustellen. Daher ist in einer weiteren bevorzugten Ausführungsvariante vorgesehen, dass das zumindest eine Führungselement entlang der ersten bzw. zweiten Drehachse des Aufnahmeelementes translatorisch verschiebbar angeordnet ist.

Eine weitere bevorzugte Ausführungsvariante sieht vor, dass zumindest ein Positionierfederelement vorgesehen ist, um das erste bzw. zweite Verbindungselement entlang der ersten bzw. zweiten Drehachse zu positionieren. Insbesondere wenn das Führungselement entlang des Aufnahmeelements bzw. Drehachse translatorisch verschiebbar ist, ist durch das zumindest eine Positionierfederelement sichergestellt, dass die Position des flexiblen Mittelteils in Bezug zur Drehachse durch die Federkraft vordefiniert ist und sich bei einer Verschiebung eine Rückstellkraft aufbaut, die das flexible Mittelteil in eine Ausgangsstellung zurück drängt.

In einer weiteren bevorzugten Ausführungsvariante sind zumindest zwei auf das zumindest eine Führungselement wirkende und gegeneinander vorgespannte Positionierfederelemente vorgesehen, um das flexible Mittelteil relativ zur ersten Halterung zu positionieren, unabhängig davon, ob ein positiver oder negativer Vertikalversatz zwischen den beiden Fahrzeugteilen vorherrscht.

Insbesondere von Vorteil ist es dabei, wenn sich die Positionierfederelemente einerseits an einem Befestigungselement und andererseits an einem Führungselement abstützen. Daher ist gemäß einer weiteren bevorzugten Ausführungsvariante vorgesehen, dass die Positionierfederelemente am zylindrischen Aufnahmeelement angeordnet sind. Dabei ist es denkbar, dass die Positionierfederelemente als Zylinderfedern ausgebildet sind, wobei das Aufnahmeelement im Zentrum der Positionierfederelemente angeordnet ist, also Positionierfederelemente und Aufnahmeelement achsparallel und konzentrisch angeordnet sind.

Gemäß einer besonders bevorzugten Ausführungsvariante der erfindungsgemäßen Seitenwandverkleidung ist es vorgesehen, dass der zweite Verbindungsabschnitt über zumindest eine Schraubenverbindung mit dem flexiblen Mittelteil verbunden ist. Bei einer Schraubenverbindung handelt es sich um eine lösbare Verbindung, die mit einfachen Werkzeugen, etwa Schraubenziehern oder ähnlichem, hergestellt oder getrennt werden kann. Eine Schraubenverbindung ermöglicht also eine schnelle und unkomplizierte Montage bzw. Demontage der flexiblen Seitenwandverkleidung. Nach den eingangs erwähnten Varianten der Erfindung (ein oder zwei Verbindungselemente) sind damit unter anderem folgende Varianten denkbar:
es ist lediglich ein Verbindungselement, das erste Verbindungselement, vorgesehen, welches über zumindest eine Schraubenverbindung mit dem flexiblen Mittelteil verbunden ist,
es sind zwei Verbindungselemente vorgesehen, wobei nur eines der Verbindungselemente über zumindest eine Schraubenverbindung mit dem flexiblen Mittelteil verbunden ist, wobei das zweite Verbindungselement alternativ mit dem flexiblen Mittelteil verbunden ist,
es sind zwei Verbindungselemente vorgesehen und beide Verbindungselemente sind über zumindest eine Schraubenverbindung mit dem flexiblen Mittelteil verbunden.

Eine weitere besonders bevorzugte Ausführungsvariante der Erfindung sieht vor, dass der zweite Verbindungsabschnitt über zumindest eine Schnellverschluss-Verbindungseinrichtung mit dem flexiblen Mittelteil verbindbar ist. Bei der Schnellverschluss-Verbindungseinrichtung handelt es sich um eine Einrichtung, die ein besonders rasches Herstellen oder Trennen der Verbindung zwischen flexiblem Mittelteil und Verbindungselement ermöglicht, vorteilhafterweise durch die Betätigung eines einzelnen Elements, etwa eines Hebels oder eines Schiebers. Insbesondere beim Koppeln oder Entkoppeln der Fahrzeugteile ist es von Vorteil, wenn die Verbindung zwischen Halterung und flexiblem Mittelteil schnell trennbar ist, sodass nicht die gesamte Seitenwandverkleidung demontiert werden muss, um die Fahrzeugteile voneinander zu trennen. Bezogen auf die beiden eingangs erwähnten Varianten der Erfindung (ein bzw. zwei Verbindungselemente) sind damit unter anderem folgende Varianten denkbar:
es ist lediglich ein Verbindungselement, das erste Verbindungselement, vorgesehen, welches über zumindest eine Schnellverschluss-Verbindungseinrichtung mit dem flexiblen Mittelteil verbunden ist,
es sind zwei Verbindungselemente vorgesehen, wobei jedes Verbindungselement für sich über zumindest eine Schnellverschluss-Verbindungseinrichtung mit einer Seite des flexiblen Mittelteils verbunden ist,
es sind zwei Verbindungselemente vorgesehen, wobei nur eines der Verbindungselemente über zumindest eine Schnellverschluss-Verbindungseinrichtung mit dem flexiblen Mittelteil verbunden ist, wobei das zweite Verbindungselement alternativ mit dem flexiblen Mittelteil verbunden ist. Bei der Schnellverschluss-Verbindungseinrichtung kann es sich dabei etwa um einen Verrastungs-Mechanismus, einen Hebelmechanismus oder einen Schiebemechanismus handeln.

In einer weiteren besonders bevorzugten Ausführungsvariante der Erfindung sind die positiven Eigenschaften der einfach montierbaren und billig herstellbaren Schraubenverbindung mit jenen der Schnellverschluss-Verbindungseinrichtung kombiniert. Daher ist erfindungsgemäß vorgesehen, dass der zweite Verbindungsabschnitt des ersten Verbindungselementes über zumindest eine Schnellverschluss-Verbindungseinrichtung mit dem flexiblen Mittelteil verbunden ist und dass der zweite Verbindungsabschnitt des zweiten Verbindungselementes über zumindest eine Schraubenverbindung mit dem flexiblen Mittelteil verbindbar ist. Mit dieser Ausführungsvariante, sowie mit jeder Ausführungsvariante die zwei Verbindungselemente aufweist, von denen eines mittels Schnellverschluss-Verbindungseinrichtung mit dem flexiblen Mittelteil verbunden ist, lässt sich eine besonders einfache Montage und Demontage der Seitenwandverkleidung erreichen, etwa zum Koppeln oder Entkoppeln der Fahrzeugteile. Dabei wird bei der Erstmontage zuerst der flexible Mittelteil mittels zumindest einer Schraubenverbindung mit dem ersten Verbindungselement verbunden. Da der flexible Mittelteil um die erste Drehachse drehbar ist, ist eine Montage auf der von den Passagieren nicht einsehbaren Seite der Seitenwandverkleidung durch Ausschwenken des flexiblen Mittelteils, ähnlich wie bei einer Schwenktüre, in einfacher Art und Weise möglich. Ist der flexible Mittelteil mit dem ersten Verbindungselement verbunden, so lässt es sich um die erste Drehachse in Richtung der zweiten Halterung drehen, wo das zweite Verbindungselement über die Schnellverschluss-Verbindungseinrichtung mit der zweiten Halterung verbunden wird. Im Falle einer Koppelung oder Entkoppelung muss die Schraubenverbindung gar nicht gelöst werden, da sich die Fahrzeugteile bereits nach dem Lösen der Schnellverschluss-Verbindungseinrichtung voneinander trennen lassen, sofern alle anderen die Fahrzeugteile verbindenden Elemente ebenfalls getrennt sind.

Gemäß einer weiteren besonders bevorzugten Ausführungsvariante ist mittels der Schnellverschluss-Verbindungseinrichtung eine formschlüssige Anbindung des zweiten Verbindungsabschnittes an den flexiblen Mittelteil herstellbar. Formschlüssig Verbindungen zeichnen sich durch besondere Zuverlässigkeit im Betrieb aus, was in Kombination mit der raschen Trennbarkeit besondere Synergie-Effekte bedingt.

Um die Montage bzw. Demontage der Seitenwandverkleidung weiter zu vereinfachen und damit unter anderem den zur Koppelung bzw. Entkoppelung der Fahrzeugteile notwendigen Zeitaufwand zu verringern, sieht eine weitere besonders bevorzugte Ausführungsvariante der Erfindung vor, dass die Schnellverschluss-Verbindungseinrichtung ein Betätigungselement umfasst, welcher von der den Schwenkachsen abgewandten Seite des flexiblen Mittelteils aus betätigbar ist. Dadurch dass das Betätigungselement von der den Passagieren zugewandten Seite aus zugänglich ist, kann das Betätigungselement ohne vorhergehende Demontageschritte bei der Entkoppelung betätigt werden. Die Betätigung des Betätigungselements erfolgt dabei durch das Montagepersonal mittels eines geeigneten Werkzeugs, beispielsweise mittels eines Spezialschlüssels. Gleichfalls ist die Koppelung nach dem Betätigen des Betätigungselements abgeschlossen und es sind in der Regel keine weiteren Montageschritte mehr notwendig. Das Betätigungselement kann beispielsweise einen Hebelarm umfassen, der mit einem Schiebemechanismus verbunden ist, wobei die Betätigung des Betätigungselements zu einem Verrasten eines Schiebers in einer entsprechenden Aufnahme führt.

In einer weiteren Ausführungsvariante der erfindungsgemäßen Seitenwandverkleidung ist es vorgesehen, dass der flexible Mittelteil eine flexible Mittelplatte und zwei Anschlussabschnitte umfasst, wobei einer der Anschlussabschnitte mit dem zweiten Verbindungsabschnitt des ersten Verbindungselementes verbunden ist und/oder dass der andere der Anschlussabschnitte mit dem zweiten Verbindungsabschnitt des zweiten Verbindungselementes verbunden ist. Durch die Unterteilung des flexiblen Mittelteils in eine flexible Mittelplatte, welche wölbbar und flexibel verformbar ist, und zwei Anschlussabschnitte, welche beispielsweise als Leichtmetallschienen, etwa aus Aluminium, ausgeführt sein können, lässt sich einerseits ein Bereich mit hoher Steifigkeit und Tragkraft ausbilden, der zur Anbindung des flexiblen Mittelteils an das erste bzw. zweite Verbindungselement dient, und andererseits ein Bereich, der wölbbar bzw. streckbar oder stauchbar ist und damit die Längung bzw. Kürzung des flexiblen Mittelteils bei Relativbewegungen der Fahrzeugteile, etwa bei einer Kurvenfahrt, ausgleicht.

Große, homogene Flächen werden in Schienenfahrzeugen, speziell in Massen-Fahrzeugen wie Zügen oder U-Bahnen, häufig dazu verwendet, um darauf Informationen anzuzeigen, beispielsweise Werbeinformationen oder Fahrplaninformationen. Je größer und je sichtbarer die dafür vorgesehen Fläche, desto mehr Aufmerksamkeit werden die Passagiere der Information schenken. Die Mittelplatte der Seitenverkleidung bietet eine sehr große, gut sichtbare Fläche. Um diese Fläche zur Anzeige von Informationen nutzbar zu machen ist in einer weitern ausführungsvariante der Erfindung vorgesehen, dass der flexible Mittelteil eine flexible Kunststoffplatte umfasst, welche flexible Kunststoffplatte die den Schwenkachsen abgewandten Seite der flexiblen Mittelplatte zumindest abschnittsweise, vorzugsweise vollständig, abdeckt. Die flexible Kunststoffplatte, die auf der den Passagieren zugewandten Seite der Seitenwandverkleidung angebracht ist, kann beispielsweise selbst Informationen, wie etwa Werbeinformationen, aufweisen, die etwa auf die Kunststoffplatte aufgedruckt sind. Um die angezeigten Informationen auszuwechseln, muss demnach nur die flexible Kunststoffplatte getauscht werden.

Um die Austauschbarkeit der Informationen weiter zu vereinfachen und die Informationen vor einer Manipulation zu schützen, ist in einer weiteren bevorzugten Ausführungsvariante vorgesehen, dass die flexible Kunststoffplatte aus zumindest teilweise durchsichtigem, vorzugsweise aus durchsichtigem, Polycarbonat besteht und dass zwischen der flexiblen Mittelplatte und der flexiblen Kunststoffplatte eine, vorzugsweise bedruckte, Informationsträger-Platte angeordnet ist. Durch die Transparenz der Kunststoffplatte, ist die auf der Informationsträger-Platte befindliche Information vom Übergang aus sichtbar. Die flexible Kunststoffplatte dient dabei gleichzeitig zum Schutz der Informationsträger-Platte, bei der es sich beispielsweise um, vorzugsweise laminiertes, Papier oder Pappe handelt. Die Informationsträger-Platte kann also aus kostengünstigem Material bestehen, während die Kunststoffplatte wiederverwendbar ist.

Gemäß einer weiteren Ausführungsvariante der erfindungsgemäßen Seitenwandverkleidung ist vorgesehen, dass die flexible Kunststoffplatte mittels eines Klemmrahmens und eines Halterahmens am flexiblen Mittelteil befestigt ist, wobei die Kunststoffplatte durch den Klemmrahmen festgeklemmt ist und im Halterahmen relativ bewegbar gehalten ist, um Relativbewegungen der flexiblen Mittelplatte auszugleichen. Da die Mittelplatte während des Betriebs des Schienenfahrzeugs Relativbewegungen ausgesetzt ist, ist es notwendig, dass auch die flexible Kunststoffplatte diese Relativbewegungen aufnehmen kann. Daher ist die Kunststoffplatte an einer Seite durch einen, vorzugsweise leistenförmigen, Klemmrahmen fest an dem Mittelteil befestigt bzw. festgeklemmt. Die andere Seite der flexiblen Kunststoffplatte ist in einem, vorzugsweise ebenfalls leistenförmigen, Halterahmen aufgenommen, der einen Endabschnitt der Kunststoffplatte umschließt und gegen das Loslösen fixiert, jedoch Relativbewegungen der Kunststoffplatte relativ zum Halterahmen bzw. zur Mittelplatte zulässt. Um die notwendige Festigkeit aufzuweisen sind die beiden Rahmen vorzugsweise aus Leichtmetall, etwa aus Aluminium, gefertigt.

Wenn die beiden Rahmen an ihrer Unterkante einen Anschlag für die Kunststoffplatte aufweisen, auf der die Kunststoffplatte aufliegt, kann die Kunststoffplatte einfach montiert werden und ist im Betriebszustand gegen Verrutschen nach unten gesichert. Daher sieht eine weitere bevorzugte Ausführungsvariante vor, dass der Klemmrahmen und der Halterahmen jeweils an der in Richtung der Schwenkachsen gesehen unteren Kante einen Anschlag für die Fixierung der flexiblen Kunststoffplatte aufweisen.

In einer weiteren bevorzugten Ausführungsvariante der Erfindung ist vorgesehen, dass der Klemmrahmen an einem der Anschlussabschnitte und der Halterahmen am anderen Anschlussabschnitt des flexiblen Mittelteils befestigt ist. Dadurch, dass die beiden Rahmen an den steifen Anschlussabschnitten befestigt sind, kommt es während des Betriebs zu keiner Relativbewegung zwischen Klemm- bzw. Halterahmen und dem Mittelteil. Die Flexibilität wird alleine durch die flexible Kunststoffplatte erreicht. Zur Befestigung der beiden Rahmen dienen üblicher Weise weitere Befestigungsmittel wie Schrauben oder Schraubbolzen. In einer alternativen Ausführungsvariante sind die weiteren Befestigungsmittel derart angeordnet, dass sie nur von der den Schwenkachsen zugewandten Seite, also der den Passagieren abgewandten Seite, des flexiblen Mittelteils zugänglich bzw. betätigbar und lösbar sind. Die Montage bzw. Demontage der flexiblen Kunststoffplatte ist demnach nur dann möglich, wenn die Seitenwandverkleidung geöffnet ist. In einer anderen alternativen Ausführungsvariante sind die die weiteren Befestigungsmittel derart ausgebildet, dass sie von der den Schwenkachsen abgewandten Seite, also der den Passagieren zugewandten Seite, des flexiblen Mittelteils zugänglich bzw. betätigbar und lösbar sind.

Da an Verkleidungsteile wie etwa Seitenwandverkleidungen besonders hohe Anforderungen in Bezug auf die Feuerfestigkeit gestellt werden, sieht eine weitere Ausführungsvariante vor, dass die flexible Mittelplatte aus Duroplast, vorzugsweise aus einem Kunstharz, besteht, welches durch Glasfasergewebematten verstärkt ist. Durch eine derartige Ausführung ist eine hohe Brandbeständigkeit gegeben, wodurch beispielsweise die Anforderungen gemäß EN45545 HL2 R1 erreicht werden.

Eine weitere Ausführungsvariante der erfindungsgemäßen Seitenwandverkleidung sieht vor, dass die erste bzw. zweite Halterung an der in Richtung der Schwenkachsen gesehen oberen und/oder unteren Kante eine elastisch verformbare erste Abdeckung aufweist, um eine Relativbewegung zwischen den Fahrzeugteilen parallel zu den Schwenkachsen zumindest teilweise aufnehmen zu können und/oder dass der flexible Mittelteil an der in Richtung der Schwenkachsen gesehen oberen und/oder unteren Kante eine elastisch verformbare zweite Abdeckung aufweist, um eine Relativbewegung zwischen den Fahrzeugteilen parallel zu den Schwenkachsen zumindest teilweise aufnehmen zu können. Bei einer Relativbewegung der Fahrzeugteile parallel zu den Schwenkachsen, also in anderen Worten bei einem Vertikalversatz der beiden Fahrzeugteile, ist es notwendig, dass die Seitenwandverkleidung durch den Vertikalversatz nicht beschädigt wird, obwohl möglichst die gesamte Seitenfläche des Faltenbalgs durch die Seitenwandverkleidung verdeckt ist. Die elastisch verformbaren ersten und zweiten Abdeckungen, welche vorteilhafter Weise aus Kunststoff, insbesondere aus Gummi, ausgebildet sind, ermöglichen die Aufnahme des Vertikalversatzes durch Verformung und sind sowohl an der Unterseite als auch an der Oberseite angebracht, um den Vertikalversatz in beiden Richtungen, also nach oben und nach unten, aufzunehmen. Insbesondere wenn der flexible Mittelteil translatorisch verschiebbar am Aufnahmeelement angebunden ist und somit eine Verschiebung zwischen Halterungen und flexiblen Mittelteil entlang der Drehachsen möglich ist, wird damit sicher gestellt, dass sich die Verformung der Abdeckungen näherungsweise gleichmäßig auf die an der ersten Halterung angebrachten ersten Abdeckungen, die am flexiblen Mittelteil angebrachten zweiten Abdeckungen und die an der zweiten Halterung angebrachten ersten Abdeckungen aufteilt. Somit werden alle Abdeckungen im Wesentlichen gleichmäßig belastet und damit die Wartungsintervalle erheblich reduziert.

Um die Wölbung des flexiblen Mittelteils zu ermöglichen, ist in einer weiteren Ausführungsvariante der erfindungsgemäßen Seitenwandverkleidung vorgesehen, dass am flexiblen Mittelteil zumindest ein, vorzugsweise drei, in einer Richtung quer zu den Schwenkachsen verlaufendes Spannseil angeordnet ist/sind, um die Wölbung des flexiblen Mittelteils zu ermöglichen. Das zumindest eine Spannseil sorgt für eine Vorspannung des flexiblen Mittelteils, welches dadurch bereits in seiner Ausgangsstellung auf die den Schwenkachsen entgegengesetzte Seite ausgewölbt ist, und stellt sicher, dass sich das flexible Mittelteil bei einer Relativbewegung der Fahrzeugteile weiter in dieselbe Richtung auswölbt. Das zumindest eine Spannseil versucht also stets, das flexible Mittelteil zu stauchen bzw. auszuwölben.

Um das flexible Mittelteil in Spannung zu halten bzw. zu spannen, ist in einer weiteren Ausführungsvariante der Erfindung vorgesehen, dass die erste bzw. die zweite Halterung jeweils über zumindest eine Drehfeder mit einem Drehmoment beaufschlagt ist. Dadurch, dass der flexible Mittelteil durch das Drehmoment gespannt wird, wird einer inneren, die Wölbung begründenden, Kraft entgegen gewirkt. Vorteilhaft ist es dabei, wenn der flexible Mittelteil einerseits durch die Drehfedern gespannt und gleichzeitig durch das zumindest eine Spannseil gestaucht wird, wobei die beiden Kräfte einander in einer Ausgangsstellung, bei der die Fahrzeugteile nicht gegeneinander versetzt sind, aufheben. Durch das Zusammenwirken der beiden entgegen gerichteten Zugkräfte wird erreicht, dass sich die Seitenwandverkleidung stets in die Ausgangsstellung zurück bewegt, wenn die Relativbewegung der Fahrzeugteile abgeschlossen ist.

Die eingangs gestellten Aufgaben werden auch gelöst durch einen Übergang zwischen zwei gelenkig miteinander verbundenen Fahrzeugteilen, wobei an der Innenseite des Übergangs eine erfindungsgemäße Seitenwandverkleidung angebracht ist und wobei die erste Halterung über die zumindest eine erste Befestigungskonsole mit einem der Fahrzeugteile direkt oder indirekt verbunden ist und/oder die zweite Halterung über die zumindest eine, zweite Befestigungskonsole mit dem anderen Fahrzeugteil direkt oder indirekt verbunden ist. Über die direkte oder indirekte Verbindung der Befestigungskonsolen mit dem entsprechenden Fahrzeugteil folgen die Halterungen den Bewegungen der entsprechenden Fahrzeugteile. Im Detail folgt die erste Halterung den Bewegungen des ersten Fahrzeugteils und die zweite Halterung den Bewegungen des zweiten Fahrzeugteils. Die daraus resultierenden Relativbewegungen, wie etwa bei einer Kurvenfahrt oder einem Vertikalversatz, werden von der Seitenwandverkleidung aufgenommen, wobei die Seitenwandverkleidung der Bewegung des Faltenbalgs, in dem die Seitenwandverkleidung angeordnet ist, folgt. Unter der direkten Verbindung ist dabei zu verstehen, dass die Befestigungskonsolen unmittelbar am Fahrzeugteil befestigt sind, etwa über Konsolen oder Befestigungspunkte, unter der indirekten Verbindung hingegen ist die Befestigung der Befestigungskonsolen an einem Zwischenelement, etwa am Faltenbalg, zu verstehen.

Um die Befestigungskonsolen direkt an den Fahrzeugteilen befestigen zu können, ohne dass dafür gesonderte Befestigungsstellen am Wagenkasten der Fahrzeugteile bereitgestellt werden müssen, ist gemäß einer Ausführungsvariante der Erfindung vorgesehen, dass die erste bzw. zweite Befestigungskonsole jeweils an einem Endrahmen eines Wagenkastens des entsprechenden Fahrzeugteils befestigt sind. Der Endrahmen eignet sich insbesondere zur Anbindung der Befestigungselemente, da er die erforderliche Steifigkeit aufweist und geeignet ist die auftretenden Kräfte aufzunehmen.

Oftmals ist es erwünscht auch den Übergang zwischen zwei Fahrzeugteilen mit zusätzlichen Leuchtmitteln auszuleuchten, sodass beispielsweise beim Durchfahren von Tunnels oder bei Dunkelheit der Übergang noch ausreichend beleuchtet ist. Um die Verkabelung möglichst einfach verlegen zu können, sodass diese keiner Relativbewegung ausgesetzt ist, ist ein Leuchtmittel in einem Bürstenhalter integriert. Derartige Bürstenhalter bestehen in der Regel aus einem Profilblech, vorzugsweise aus einer Profilschiene, welche an einem Fahrzeugteil, beispielsweise am Endrahmen, befestigt sind. An einem Ende des Profilblechs ist eine leistenförmige Bürste angebracht, die den Spalt zwischen der Halterung bzw. dem Mittelteil und dem Fahrzeugteil überdeckt, um Passagiere vor Verletzungen zu schützen. Da das Profilblech fest mit dem Fahrzeugteil verbunden ist, treten während des Betriebs keine Relativbewegungen auf. Daher ist in einer weiteren Ausführungsvariante des erfindungsgemäßen Übergangs vorgesehen, dass jeweils ein als Halterung für eine Bürste zur Abdeckung eines Spalts zwischen Halterung und Fahrzeugteil ausgebildetes Profilblech am ersten und/oder zweiten Fahrzeugteil befestigt ist und dass das Profilblech mit einem Leuchtmittel versehen ist. Somit ist pro Seitenwandverkleidung in einem Übergang die Anbringung von bis zu zwei zusätzlichen Beleuchtungsquellen möglich.

In einer weiteren Ausführungsvariante ist vorgesehen, dass das Leuchtmittel als Leuchtmittelstreifen, vorzugsweise als LED-Leiste, ausgebildet ist und in einer im Profilblech ausgebildeten Schiene angeordnet ist. Mittels eines Leuchtmittelstreifens, wie einer LED-Leiste, lässt sich in einfacher Art und Weise eine hohe Beleuchtungsintensität bei geringem Platzaufwand erreichen. Der Leuchtmittelstreifen kann beispielsweise in der Schiene verrastet sein.

Eine der eingangs gestellten Aufgaben werden auch gelöst durch ein Verfahren zum Schließen einer Seitenwandverkleidung nach Anspruch 20.

Nach dem Stand der Technik sind lediglich solche Seitenwandverkleidungen bekannt, welche vollständig vormontiert sind und als Einheit verbaut werden. Um zwei Fahrzeugteile zu entkoppeln, muss die gesamte Seitenwandverkleidung demontiert werden oder eine erhebliche Vorspannkraft überwunden werden. Auch sind teilweise aufwändige Werkzeuge und Konsolenkonstruktionen notwendig um die Seitenwandverkleidung bei der Koppelung zu schließen. Im erfindungsgemäßen Verfahren sind lediglich einfache Bewegungsabläufe notwendig, um die Seitenwandverkleidung zu schließen, insbesondere stellt das schwenktürartige Drehen des flexiblen Mittelteils um die erste Drehachse, die vorzugsweise parallel zur Höhenrichtung ausgerichtet ist, eine besonders einfache Relativbewegung dar. Nachdem der flexible Mittelteil durch die Drehbewegung so positioniert ist, dass ein Großteil des Abstands zwischen den Fahrzeugteilen überbrückt ist und nur mehr ein Spalt zwischen flexiblen Mittelteil und dem zweiten Fahrzeugteil bzw. einem am zweiten Fahrzeugteil zur Befestigung des flexiblen Mittelteils vorgesehenen Element, wie einer Halterung, vorhanden ist, wird dieser Spalt geschlossen. Dazu wird die erste Drehachse um eine parallel verlaufenden erste Schwenkachse verschwenkt, bis der Spalt geschlossen ist. Es ist dabei genauso denkbar, dass auch das am zweiten Fahrzeugteil vorgesehene Element zur Befestigung des flexiblen Mittelteils, etwa eine weitere Halterung, um eine zweite Schwenkachse verschwenkt wird, um den Spalt auch von der anderen Seite zu verschließen. Sobald der flexible Mittelteil mit dem zweiten Fahrzeugteil verbunden ist, etwa am zur Befestigung vorgesehen Element eigerastet ist, wird zumindest eine Schnellverschluss-Verbindungseinrichtung betätigt, um die Seitenwandverkleidung zu verriegeln und in einer geschlossenen Stellung zu halten.

Zum Öffnen einer Seitenwandverkleidung für die Innenseite eines Übergangs zwischen zwei gelenkig miteinander verbundenen Fahrzeugteilen während der Entkoppelung der beiden Fahrzeugteile wird ein weiteres Verfahren nach Anspruch 21 vorgeschlagen.

Vorstellbar ist auch ein Verfahren zum Schließen einer erfindungsgemäßen Seitenwandverkleidung während der Koppelung zweier Fahrzeugteile, wobei eine erste Halterung schwenkbar am ersten Fahrzeugteil befestigt ist, wobei eine zweite Halterung schwenkbar am zweiten Fahrzeugteil befestigt ist, wobei ein erster Anschlussabschnitt eines flexiblen Mittelteils drehbar an die erste Halterung angebunden ist,
wobei ein zweiter Anschlussabschnitt des flexiblen Mittelteils mit der zweiten Halterung verbunden wird, indem folgende Verfahrensschritte durchgeführt werden:
- Bewegen des zweiten Anschlussabschnittes in Richtung der zweiten Halterung;
- Einrasten des zweiten Anschlussabschnittes in der zweiten Halterung;
- Fixieren des zweiten Anschlussabschnittes an der zweiten Halterung.

Das Verfahren zeichnet sich dadurch aus, dass eine Relativbewegung zwischen der ersten Halterung und dem flexiblen Mittelteil durch die drehbare Anbindung des ersten Anschlussabschnitts ermöglicht wird. Zum Ausgangspunkt des Verfahrens ist der zweite Anschlussabschnitt des flexiblen Mittelteils mit keinem anderen Element verbunden, sondern schwebt frei und lässt sich drehen. Damit lässt sich der zweite Anschlussabschnitt in Richtung der zweiten Halterung bewegen, um die Seitenwandverkleidung zu schließen. Sobald der zweite Anschlussabschnitt relativ zur zweiten Halterung positioniert ist, rastet der zweite Anschlussabschnitt an der zweiten Halterung, beispielsweise an einer Fangeinrichtung, ein, sodass die Relativposition zwischen flexiblen Mittelteil und zweiter Halterung gehalten wird. Schlussendlich wird der zweite Anschlussabschnitt über entsprechende Mittel an der zweiten Halterung fixiert, etwa durch eine Schraubenverbindung, sodass alle betriebsmäßigen Relativbewegungen zwischen den Fahrzeugteilen ablaufen können, ohne dass die Verbindung sich löst.

Eine Ausführungsvariante des Verfahrens sieht vor, dass das Bewegen des zweiten Anschlussabschnitts in Richtung der zweiten Halterung folgende Verfahrensschritte umfasst:
- Drehen des flexiblen Mittelteils, vorzugsweise um eine erste Drehachse, bis der zweite Anschlussabschnitt in Richtung der zweiten Halterung weist;
- Schwenken der ersten bzw. zweiten Halterung, vorzugsweise um eine erste bzw. zweite Schwenkachse, zumindest bis der zweite Anschlussabschnitt die zweite Halterung kontaktiert.

Die Kombination der Schwenkbewegung der ersten Halterung um die erste Schwenkachse sowie der Drehbewegung des flexiblen Mittelteils um die erste Drehachse stellt einen besonders einfachen Bewegungsablauf dar, der mit geringem Kraftaufwand und ohne spezielles Werkzeug durchgeführt werden kann. Zur Kontaktierung des zweiten Anschlussabschnitts mit der zweiten Halterung wird auch die zweite Halterung um die zweite Schwenkachse in Richtung des zweiten Anschlussabschnitts geschwenkt, um den Abstand zwischen zweitem Anschlussabschnitt und zweiter Halterung zu überwinden. Gleichzeitig ist es natürlich genauso denkbar, dass der flexible Mittelteil bei der Bewegung elastisch verformt wird.

In einer weiteren Ausführungsvariante des Verfahrens ist vorgesehen, dass beim Schwenken der ersten bzw. zweiten Halterung ein von zumindest einer Drehfeder bewirktes Drehmoment überwunden wird. Drehfedern, die wie zuvor beschrieben, ein Drehmoment aufbringen, welches der Bewegung der Halterungen zueinander entgegenwirkt, werden eingesetzt, um das flexible Mittelteil unter Spannung zu halten. Dementsprechend ist es notwendig diese Drehmomente zu überwinden, um die Seitenwandverkleidung zu schließen.

Gemäß einer bevorzugten Ausführungsvariante der Erfindung ist vorgesehen, dass zur Fixierung des zweiten Anschlussabschnittes an der zweiten Halterung zumindest eine Schnellverschluss-Verbindungseinrichtung betätigt wird. Durch eine Schnellverschluss-Verbindungseinrichtung kann die Verbindung zwischen zweitem Anschlussabschnitt und zweiter Halterung, wie zuvor beschrieben, rasch und ohne komplizierte zusätzliche Werkzeuge hergestellt beziehungsweise gelöst werden. Vorteilhaft ist es dabei, wenn der zweite Anschlussabschnitt durch die Betätigung der Schnellverschluss-Verbindungseinrichtung formschlüssig mit der zweiten Halterung verbunden wird.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Explosionsdarstellung einer Ausführungsvariante der erfindungsgemäßen Seitenwandverkleidung von vorne;
- Fig. 2: eine Explosionsdarstellung der erfindungsgemäßen Seitenwandverkleidung von hinten;
- Fig. 3: eine horizontale Schnittdarstellung eines Übergangs mit erfindungsgemäßer Seitenwandverkleidung;
- Fig. 4: eine axonometrische Ansicht einer Halterung der erfindungsgemäßen Seitenwandverkleidung;
- Fig. 4a: eine Detailansicht der Halterung aus Fig. 4;
- Fig. 5: eine horizontale Schnittdarstellung der erfindungsgemäßen Seitenwandverkleidung durch Ebene A aus Fig. 4a;
- Fig. 6: eine horizontale Schnittdarstellung der erfindungsgemäßen Seitenwandverkleidung durch Ebene B aus Fig. 4a;
- Fig. 7: eine Detaildarstellung einer Schnellverschluss-Verbindungseinrichtung der erfindungsgemäßen Seitenwandverkleidung von hinten;
- Fig. 8: eine vertikale Schnittdarstellung der Schnellverschluss-Verbindungseinrichtung;
- Fig. 9: eine Detaildarstellung der Schnellverschluss-Verbindungseinrichtung von vorne;
- Fig. 10a: eine horizontale Schnittdarstellung des Übergangs in einer Ausgangsstellung;
- Fig. 10b: eine horizontale Schnittdarstellung des Übergangs in einer verkürzten Stellung;
- Fig. 10c: eine horizontale Schnittdarstellung des Übergangs in einer gelängten Stellung;
- Fig. 11: eine Explosionsdarstellung einer Seitenwandverkleidung mit flexibler Kunststoffplatte;
- Fig. 12: eine axonometrische Ansicht eines flexiblen Mittelteils mit Kunststoffplatte;
- Fig. 13a: eine Schnittdarstellung eines Klemmrahmens durch die Ebene C in Fig. 12;
- Fig. 13b: eine Schnittdarstellung eines Halterahmens durch die Ebene C in Fig. 12;
- Fig. 14: eine Schnittdarstellung eines alternativ befestigten Halterahmens durch die Ebene C in Fig. 12;
- Fig. 15: eine axonometrische Detailansicht des Übergangs mit Bürstenhalter;
- Fig. 16: eine Schnittdarstellung des Übergangs mit Bürstenhalter.

### WEGE ZUR AUSFÜHRUNG DER ERFINDUNG

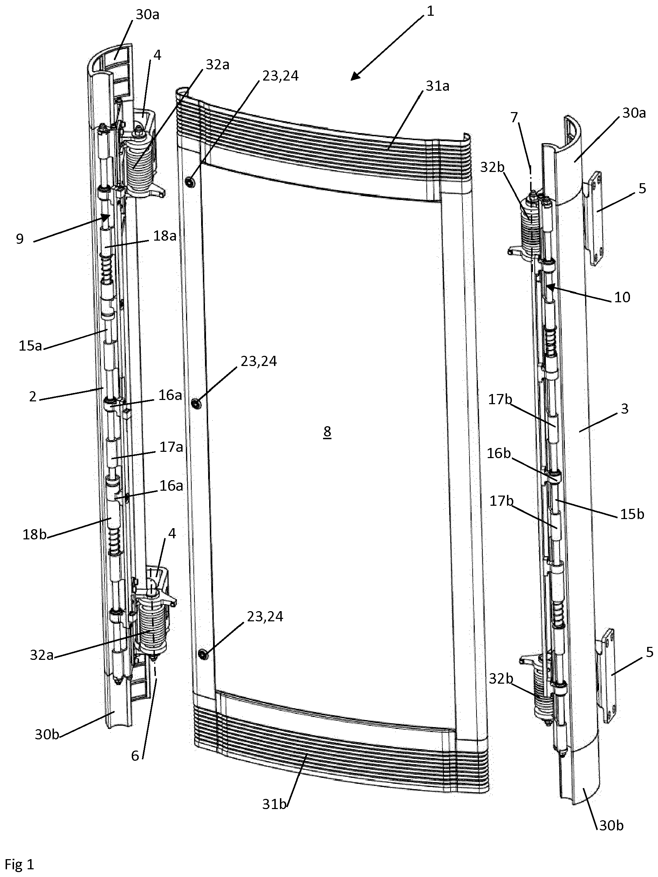

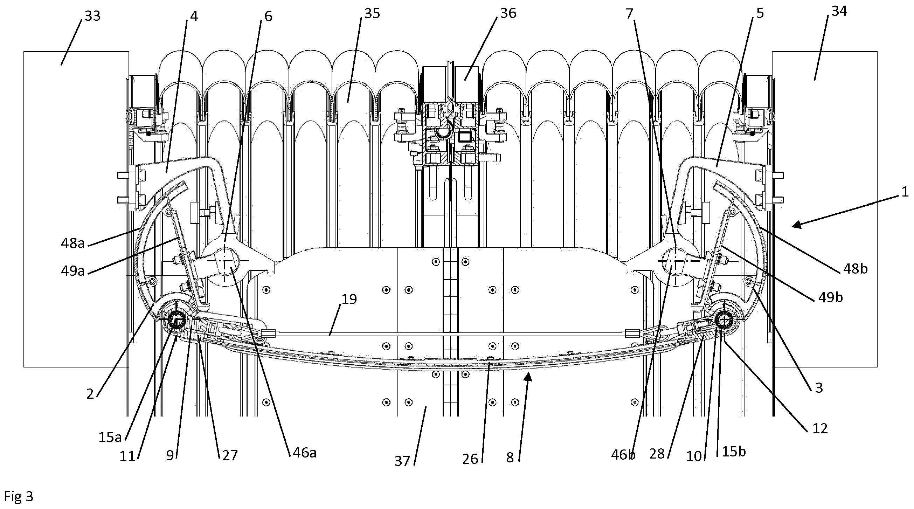

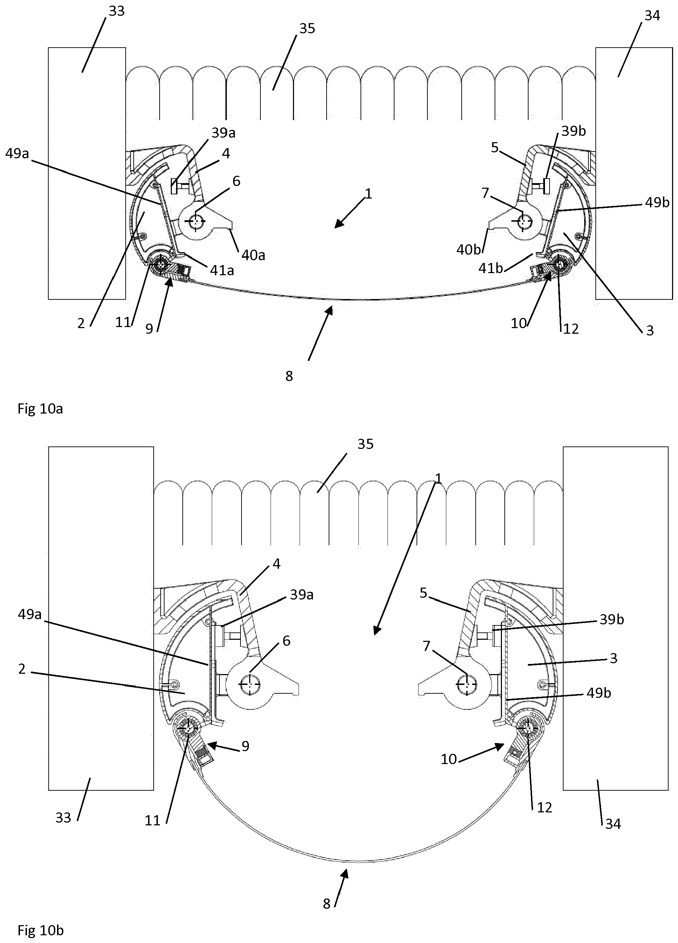

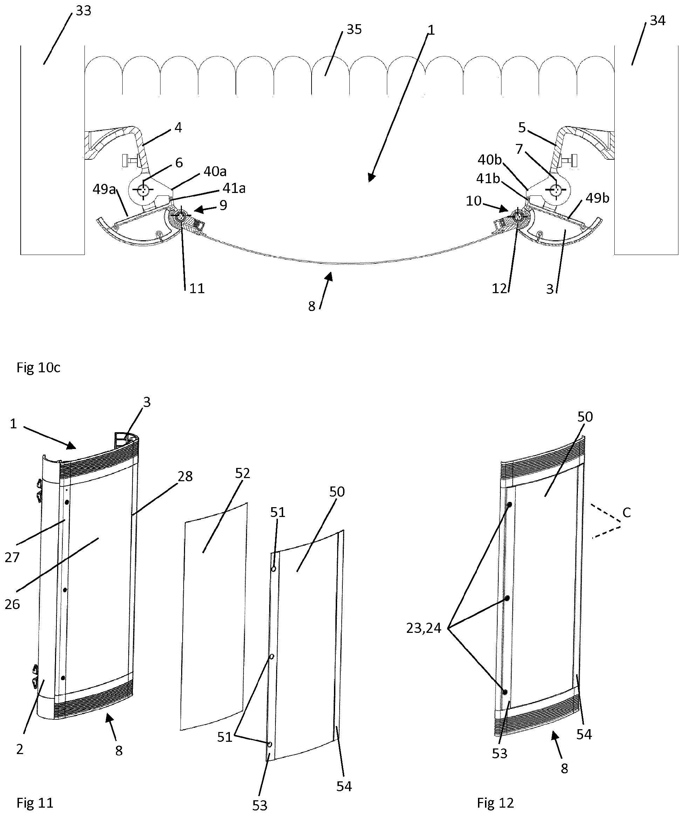

Figur 1 zeigt eine Ausführungsvariante einer erfindungsgemäßen Seitenwandverkleidung 1 für die Innenseite eines Übergangs zwischen zwei gelenkig miteinander verbundenen Fahrzeugteilen 33,34 (siehe Fig. 3 und 10 a,b,c). Die Seitenwandverkleidung 1 umfasst eine erste Halterung 2, eine zweite Halterung 3 und einen zwischen den beiden Halterungen 2,3 angeordneten flexiblen Mittelteil 8, welcher in einer Ausgangsstellung gewölbt ist (siehe u.a. Fig. 3 und 10a). Die Betrachtungsrichtung ist dabei von vorne, also aus der Sicht eines beförderten Passagiers auf die Innenseite des Übergangs. In der Folge werden die einzelnen Komponenten näher beschrieben:
Die erste Halterung 2 ist an zwei ersten Befestigungskonsolen 4 angebunden und lässt sich um eine, durch die Befestigungskonsolen 4 ausgebildete, erste Schwenkachse 6 schwenken. Die erste Schwenkachse 6 ist dabei parallel zur Höhenrichtung des die Fahrzeugteile 33,34 aufweisenden Fahrzeugs ausgerichtet. Dabei ist jeweils eine Befestigungskonsole 4 im oberen Bereich der ersten Halterung 2 und eine im unteren Bereich der ersten Halterung 2 angeordnet. Der Übersichtlichkeit halber ist die erste Schwenkachse 6 lediglich in der unteren ersten Befestigungskonsole 4 eingezeichnet, es versteht sich jedoch von selbst, dass beide erste Befestigungskonsolen 4 die erste Schwenkachse 6 gemeinsam ausbilden. An jeder ersten Befestigungskonsole 4 ist eine Drehfeder 32a angeordnet, welche die erste Halterung 2 mit einem Drehmoment beaufschlagt, um den flexiblen Mittelteil 8 in Richtung des ersten Fahrzeugteils 33 zu ziehen. Die Drehfedern 32a sind also derart ausgebildet, dass der flexible Mittelteil 8, der an seinem der ersten Halterung 2 zuweisenden Endbereich an die erste Halterung 2 angebunden ist, gespannt bzw. gedehnt wird. Denkbare konstruktive Ausführungen für die Drehfedern 32a sind unter anderem Spiralfedern oder Schenkelfedern.

Die äußere Begrenzungswand 48a (gekennzeichnet u.a. in Fig. 3, 5 und 6) der ersten Halterung 2 entspricht der Mantelfläche eines Kreiszylinders der konzentrisch zur ersten Schwenkachse 6 ausgerichtet ist, wobei der Grundriss des Kreiszylinders als Kreissektor ausgebildet ist. Da der Mittelpunkt des Kreissektors auf der ersten Schwenkachse 6 liegt, bewegt sich die äußere Begrenzungswand 48a der ersten Halterung 2 bei einer Schwenkbewegung auf einer Kreisbahn um die erste Schwenkachse 6. Auf der dem flexiblen Mittelteil 8 zugewandten Seite der ersten Halterung 2 ist ein zylindrisches Aufnahmeelement 15a, welches einen kreisrunden Querschnitt aufweist und beispielsweise als Rohr oder Stange ausgebildet sein kann, vorgesehen. Das Aufnahmeelement 15a bildet dabei eine erste Drehachse 11 (siehe u.a. Fig. 3) aus. Die Befestigung des Aufnahmeelements 15a an der ersten Halterung 2 erfolgt über hülsenförmige Befestigungselemente 17a, welche über die Erstreckung der ersten Halterung 2 in Höhenrichtung, also parallel zur ersten Schwenkachse 6, verteilt sind.

Um den flexiblen Mittelteil 8 drehbar an die erste Halterung 2 anzubinden, ist ein erstes Verbindungselement 9 vorgesehen, welches um die erste Drehachse 11 drehbar ist. Dieses erste Verbindungselement 9 umfasst mehrere hülsenförmige Führungselemente 16a, welche am zylindrischen Aufnahmeelement 15a drehbar angeordnet sind. Die Führungselemente 16a sind, genau wie die Befestigungselemente 17a, entlang der Höhenrichtung verteilt, wobei jeweils ein Führungselement 16a auf ein Befestigungselement 17a folgt und jeweils ein Befestigungselement 17a den oberen und den unteren Abschluss bildet.

Die Führungselemente 16a sind translatorisch verschiebbar am Aufnahmeelement 15a angeordnet, sodass das erste Verbindungselement 9, und damit der daran angebundene flexible Mittelteil 8, entlang der ersten Drehachse 11 gegenüber der ersten Halterung 2 in Höhenrichtung verschiebbar ist. Um das erste Verbindungselement 9 entlang der ersten Drehachse 11 zu positionieren, sind zwei Positionierfederelemente 18a,b vorgesehen.

Es versteht sich dabei von selbst, dass in alternativen Ausführungsvarianten der Erfindung auch andere konstruktive Maßnahmen zur drehbaren Anbindung des flexiblen Mittelteils 8 an der ersten Halterung 2 vorgesehen sein können, denkbar wären etwa die Anbindung über Gelenkverbindungen, Wälzlager oder Gelenkstangen.

Die zweite Halterung 3, die der ersten Halterung 2 gegenüberliegend am zweiten Fahrzeugteil 34 angeordnet ist, ist spiegelsymmetrisch zur ersten Halterung 2 ausgebildet.

Demnach ist die zweite Halterung 3 über zwei zweite Befestigungskonsolen 5 um eine zweite Schwenkachse 7 schwenkbar am zweiten Fahrzeugteil 34 angebunden. Zwei Drehfedern 32b, die an den zweiten Befestigungskonsolen 5 angeordnet sind, beaufschlagen die zweite Halterung 3 mit einem Drehmoment, um den flexible Mittelteil 8 in Richtung des zweiten Fahrzeugteils 34 zu ziehen bzw. zu spannen oder zu dehnen.

An der dem flexiblen Mittelteil 8 zugewandten Seite der zweiten Halterung 3 ist ein zylindrisches Aufnahmeelement 15b, welches eine zweite Drehachse 12 (siehe u.a. Fig. 3) ausbildet, über hülsenförmige Befestigungselemente 17b an der zweiten Halterung 3 befestigt. Ein zweites Verbindungselement 10 ist vorgesehen, um den flexiblen Mittelteil 8 um die zweite Drehachse 12 drehbar an der zweiten Halterung 3 anzubinden. Das zweite Verbindungselement 10 weist hülsenförmige Führungselemente 16b auf, welche am Aufnahmeelement 15b schwenkbar angebunden sind. Da die Führungselemente 16b translatorisch verschiebbar am Aufnahmeelement 15b angeordnet sind, sodass der flexible Mittelteil 8 entlang der zweiten Schwenkachse 7, also in anderen Worten entlang der Höhenrichtung, gegenüber der zweiten Halterung 3 verschiebbar ist, sind auch an der zweiten Halterung 3 zwei Positionierfederelemente 18a,b vorgesehen, um den flexiblen Mittelteil 8 in Höhenrichtung zu positionieren.

Die translatorische Verschiebbarkeit des flexiblen Mittelteils 8 gegenüber der ersten 2 bzw. zweiten Halterung 3, durch Verschiebung der Führungselemente 16a,b auf den entsprechenden Aufnahmeelementen 15a,b ermöglicht es, Vertikalversätze, also Höhenunterschiede in Richtung der Schwenkachsen 6,7 gemessen, zwischen den beiden Fahrzeugteilen 33,34 auszugleichen. Solche Vertikalversätze treten etwa auf, wenn es sich bei dem Fahrzeug um ein Schienenfahrzeug handelt, bei dem entweder die Räder der beiden Fahrzeugteile 33,34 ungleich abgenützt sind, oder die Federzustände der Primärfederung bzw. der Sekundärfederung der Fahrzeugteile 33,34 unterschiedlich sind. Zusätzlich dazu sind an der unteren Kante der ersten 2 bzw. der zweiten Halterung 3 jeweils eine erste elastisch verformbare Abdeckung 30b und an der oberen Kante der Halterungen 2,3 jeweils eine erste elastisch verformbare Abdeckung 30b angebracht. Da auf der oberen und unteren Kante des flexiblen Mittelteils 8 eine zweite elastische Abdeckung 31a,b angebracht ist, wobei die Kanten der Halterungen 2,3 und des flexiblen Mittelteils 8 in Höhenrichtung bündig abschließen, wird im Falle eines Vertikalversatzes ein Teil des Vertikalversatzes von den ersten 30a,b und zweiten Abdeckungen 31a,b aufgenommen. Die verformbaren Abdeckungen bestehen dabei aus elastischem Gummi. Da sich bei einer Verschiebung des flexiblen Mittelteils 8 die unteren bzw. oberen Kanten parallel zueinander verschieben, verteilt sich die Verformung auf alle Abdeckungen 30a,b bzw. 31a,b annähernd gleichmäßig. Zur Verformung kommt es immer dann, wenn die Abdeckungen 30a,b bzw. 31a,b durch den Vertikalversatz mit einem anderen Element des Übergangs, etwa einem Brückenplattenboden 37 (sieh Fig. 3) oder einem (nicht dargestellten) Deckenelement, kollidieren. Die Erstreckung der Abdeckungen 30a,b bzw. 31a,b parallel zur Höhenrichtung entspricht dabei zwischen 5% und 20%, vorzugsweise zwischen 8% und 15%, der Abmessung der Halterungen 2,3 in derselben Richtung.

Zwei Positionierfederelemente 18a,b sind an jeweils einem Aufnahmeelement 15a,b angeordnet und gegeneinander verspannt, um den flexiblen Mittelteil 8 nach dem Ende des Vertikalversatzes wieder in eine Ausgangsstellung zurück zu bringen. Da die beiden Positionierfederelemente 18a,b in entgegengesetzte Richtungen wirken, wird eine Rückstellung des jedenfalls erreicht, unabhängig davon, ob ein positiver oder negativer Vertikalversatz, also mit anderen Worten eine Verschiebung nach oben oder nach unten, vorgelegen hat.

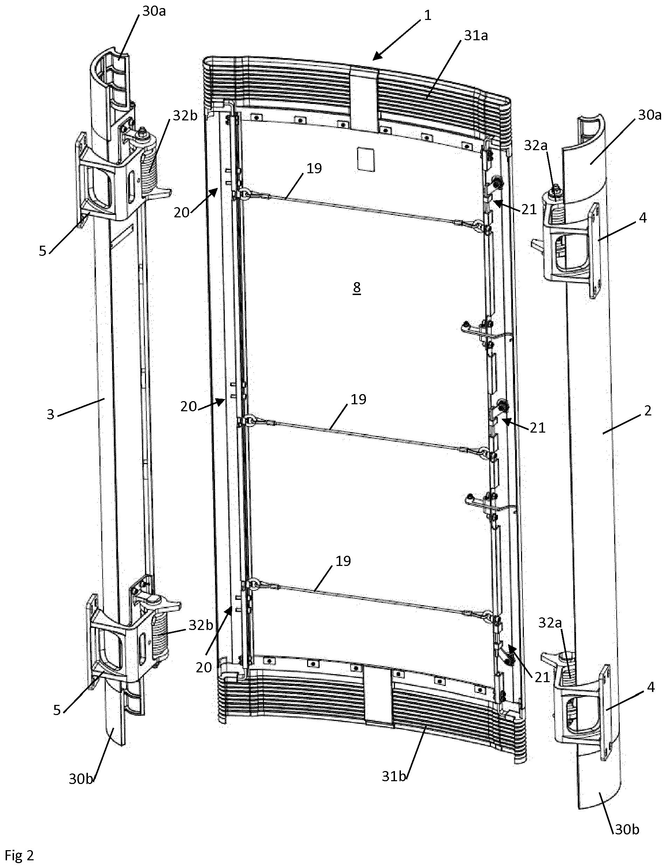

In Figur 2 ist die Seitenwandverkleidung 1 von der Rückseite aus zu sehen, also von jener Seite, die die beförderten Passagiere nicht einsehen können. Dabei ist zu erkennen, dass es sich bei den Befestigungskonsolen 4,5 um Befestigungswinkel mit drei Schenkeln handelt, wobei der erste Schenkel am jeweiligen Fahrzeugteil 33,34 befestigt ist, der mittlere Schenkel kreisbogenförmig ausgebildet ist um die erste 2 bzw. zwei Halterung 3 aufzunehmen ohne dass dabei große Spalte entstehen und wobei am dritten Schenkel die jeweilige Halterung 2,3 schwenkbar angebunden ist (siehe auch Fig. 3, 5 und 6). Die Büge zwischen den Schenkeln verlaufen dabei jeweils parallel zu den Schwenkachsen 6,7.

Der flexible Mittelteil 8 ist durch drei Spannseile 19, welche parallel zueinander angeordnet sind und quer, vorzugsweise normal, zu den Schwenkachsen 6,7 verlaufen, vorgespannt, sodass der flexible Mittelteil 8 in der Ausgangsstellung gewölbt ist. In jedem Drittel des flexible Mittelteils 8 in Höhenrichtung gesehen, ist jeweils ein Spannseil 19 angeordnet. Die Spannseile 19 ziehen die Endbereiche des flexiblen Mittelteils 8 zusammen, sodass der flexible Mittelteil 8 durch die Spannseile 19 gestaucht bzw. gewölbt ist. Im Zusammenspiel zwischen den Drehfedern 32a,b und den Spannseilen 19 wird bei einer Kurvenfahrt des Fahrzeuges, bei dem die Seitenwandverkleidung 1 an der Kurvenaußenseite gedehnt und an der Kurveninnenseite gestaucht wird, sichergestellt, dass sich die Seitenwandverkleidung 1 in die Ausgangsstellung zurück bewegt, sobald die Kurvenfahrt beendet ist.

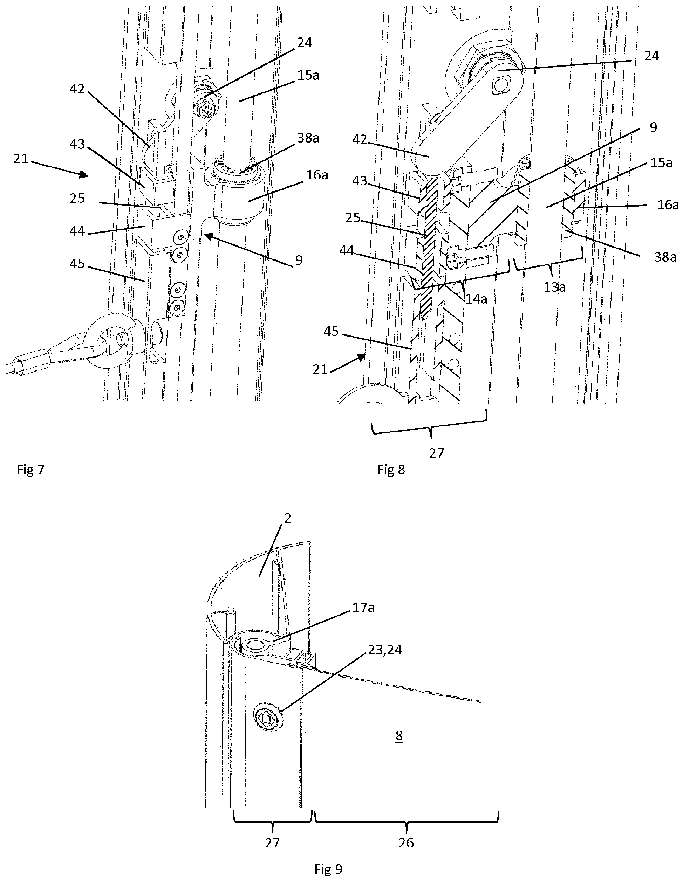

Ebenfalls in Figur 2 zu erkennen, ist die Gestaltung der Verbindung des flexiblen Mittelteils 8 mit der ersten 2 und zweiten Halterung 3: So sind zur Verbindung des zweiten Verbindungselements 10 (nicht zu sehen), und damit auch des flexiblen Mittelteils 8, mit der zweiten Halterung 3 drei Schraubenverbindungen 20 vorgesehen, die im vorliegenden Ausführungsbeispiel als drei Schraubenpaare ausgebildet sind. Zur Verbindung des ersten Verbindungselements 9 (ebenfalls nicht zu sehen) mit der ersten Halterung 2 sind drei Schnellverschluss-Verbindungseinrichtungen 21 vorgesehen, auf die in den Figuren 7 bis 9 ausführlich eingegangen wird. Sowohl die Schraubenverbindungen 20 als auch die Schnellverschluss-Verbindungseinrichtungen 21 sind so angeordnet, dass in jedem Drittel des flexiblen Mittelteils 8 in Höhenrichtung gesehen, jeweils eine Schraubenverbindung 20 bzw. eine Schnellverschluss-Verbindungseinrichtungen 21 angeordnet ist.

Figur 3 zeigt einen Übergang für die beiden gelenkig miteinander verbundenen Fahrzeugteile 33,34, bei der sowohl ein die beiden Fahrzeugteile 33,34 verbindender Faltenbalg 35 als auch ein Teil eines Brückenplattenbodens 37 dargestellt sind, wobei die Fahrzeugteile 33,34 lediglich schematisch angedeutet sind. In der Mitte des Faltenbalgs 35, also in der Mitte zwischen den beiden Halterungen 2,3 ist eine Trenneinrichtung 36 vorgesehen, mit der der Faltenbalg 35 in der Mitte geteilt werden kann.

Es ist zu erkennen, dass die erste Befestigungskonsole 4 über Verbindungsmittel, im vorliegenden Fall Schrauben, am ersten Fahrzeugteil 33 und die zweite Befestigungskonsole 5 in derselben Art und Weise am zweiten Fahrzeugteil 34 befestigt ist. Vorteilhaft ist es dabei, wenn die Befestigungskonsolen 4,5 jeweils an einem Endrahmen des Wagenkastens des jeweiligen Fahrzeugteils 33,34 befestigt sind.

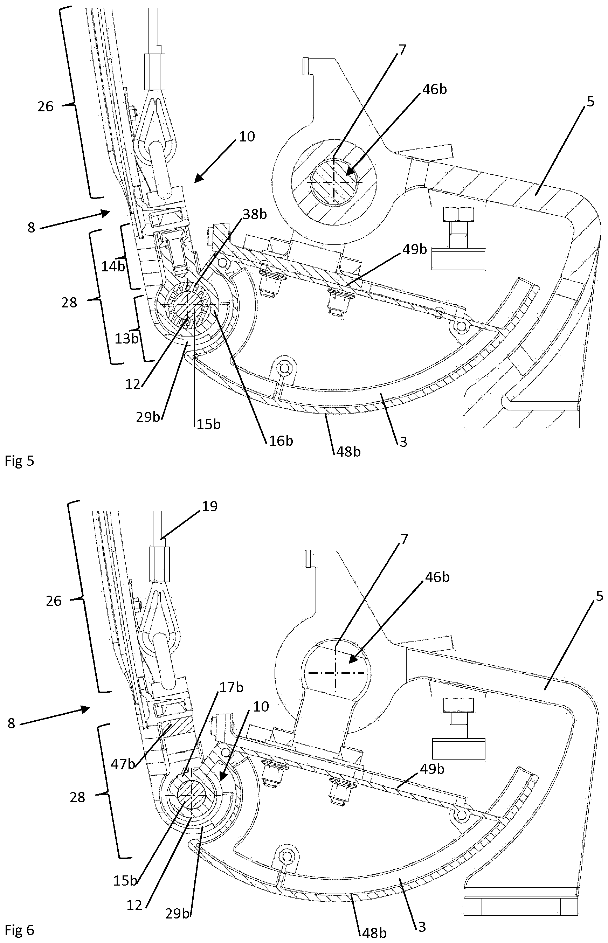

Auch die bereits eingangs beschriebene Form der äußeren Begrenzungswand 48a,b der Halterungen 2,3 in Form eines Kreisbogens geht deutlich aus Figur 3 hervor (siehe auch Figur 5 und 6). Die äußere Begrenzungswand 48a,b wird dabei durch eine innere, ebene Stützwand 49a,b (ebenfalls in den Figuren 5 und 6 gekennzeichnet) gestützt, sodass sich im Querschnitt eine kreissegment-förmige Anordnung ergibt. Die Stützwand 49a,b dient dabei auch zur Befestigung der Befestigungskonsolen 4,5. In dem das Aufnahmeelement 15a,b aufweisenden Bereich, weist die äußere Begrenzungswand 48a,b einen kreisbogenförmigen Abschnitt auf, der das Aufnahmeelement 15a,b abschnittsweise von der den Schwenkachsen 6,7 zugewendeten Seite her umgreift, um den Bauraum für die Aufnahme des ersten 9 bzw. zweiten Verbindungselements 10 bzw. für deren Drehbarkeit um die erste 11 bzw. zweite Drehachse 12 zur Verfügung zu stellen. Die erste Schwenkachse 6, die zweite Schwenkachse 7 sowie die erste Drehachse 11 und die zweite Drehachse 12 sind allesamt parallel verlaufend zueinander und parallel zur Höhenrichtung angeordnet.

Um die erste Halterung 2 schwenkbar um die erste Schwenkachse 6 an die erste Befestigungskonsole 4 anzubinden, ist ein erstes Scharnier 46a vorgesehen, welches einerseits durch die erste Befestigungskonsole 4 selbst und andererseits durch einen Scharnierbolzen ausgebildet ist, wobei der Scharnierbolzen in weiterer Folge mit der ersten Halterung 2 verbunden ist. Analog dazu ist auch die zweite Halterung 3 über ein Scharnier 46b an die zweite Befestigungskonsole 5 angebunden. Gleichzeitig dient das Scharnier 46a auch als Aufnahme für die Drehfedern 32a.

Der flexible Mittelteil 8 umfasst eine flexible Mittelplatte 26, sowie einen ersten 27 und einen zweiten Anschlussabschnitt 28. Die flexible Mittelplatte 26 ist dabei hochfeuerfest ausgebildet, etwa als eine Duroplastplatte, bspw. aus Kunstharz, mit Glasfasereinlage. Die beiden Anschlussabschnitte 27,28 sind als Leichtmetallleisten ausgebildet und dienen unter anderem zur Aufnahme der Spannseile 19. Der erste Anschlussabschnitt 27 ist dabei in dem der ersten Halterung 2 zuweisenden Endbereich des flexiblen Mittelteils 8 ausgebildet, der zweite Anschlussabschnitt 14 in dem der zweiten Halterung 3 zuweisenden Endbereich des flexiblen Mittelteils 8. Die Verbindung zwischen dem ersten 9 bzw. zweiten Verbindungselement 10 und dem flexiblen Mittelteil 8 erfolgt dabei über den ersten 27 bzw. den zweiten Anschlussabschnitt 28; mit anderen Worten ist also das erste Verbindungselement 9 mit dem ersten Anschlussabschnitt 27 und das zweite Verbindungselement 10 mit dem zweiten Anschlussabschnitt 28 verbunden.

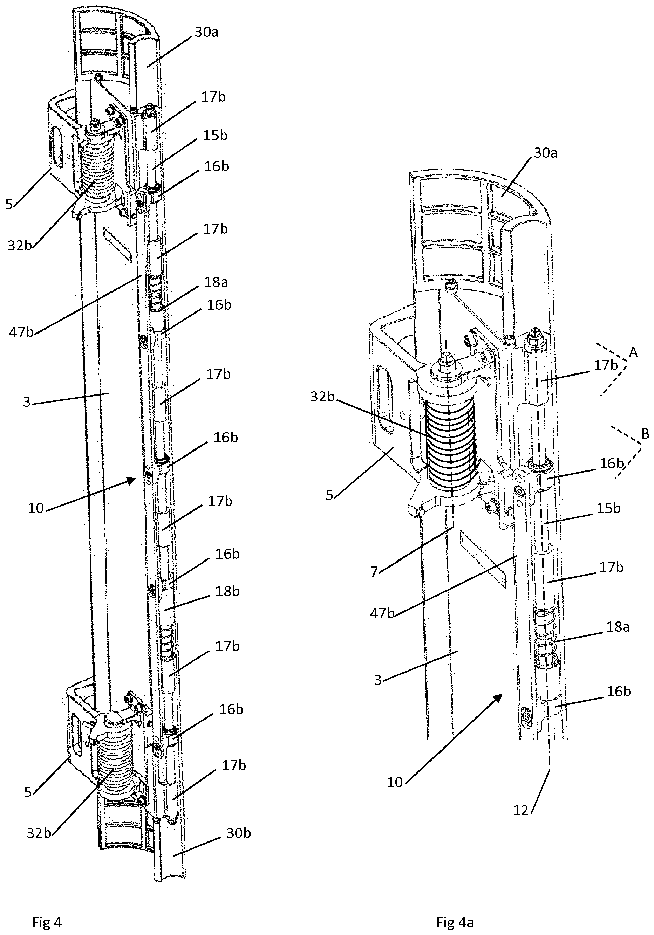

Die Figuren 4 und 4a zeigen die zweite Halterung 3 im Detail. Wie bereits zuvor beschrieben, umfasst das zweite Verbindungselement 10 mehrere, genauer gesagt fünf, hülsenförmige Führungselemente 16b, die über die Höhe des zweiten Verbindungselements 10 verteilt sind. Um die einzelnen Führungselemente 16b miteinander zur gleichmäßigen Verteilung der Last und zur Versteifung des zweiten Verbindungselements 10 zu verbinden, umfasst das zweite Verbindungselement 10 eine Verbindungsleiste 47b, die über entsprechende Verbindungsmittel, etwa Bolzen, Schrauben oder Klemmen, mit jedem der Führungselemente 16b verbunden ist.

Insbesondere in Figur 4a ist zu erkennen, dass sich die Positionierfederelemente 18b einerseits an einem hülsenförmigen Befestigungselement 17b und andererseits an einem hülsenförmigen Führungselement 16b abstützen bzw. dazwischen vorgespannt sind, um den flexiblen Mittelteil 8 entlang der Drehachsen 11, 12 zu positionieren bzw. in die Ausgangsstellung zurück zu bewegen.

Um das Aufnahmeelement 15b in den Befestigungselementen 17b zu fixieren, sind das oberste und unterste der insgesamt sechs Befestigungselemente 17b jeweils durch eine Verschlusskappe verschlossen und das Aufnahmeelement 15b mittels einer Mutter verschraubt. Natürlich sind auch andere Ausführungen denkbar, etwa die Sicherung mittels Sicherungsringen oder Wellenmuttern.

Da das erste Verbindungselement 9 bzw. die erste Halterung 2 analog aufgebaut sind, wird auf eine Wiederholung der Ausführungen zur Verbindungsleiste 47a, dem Aufnahmeelement 15a, den Befestigungselementen 17a und den Führungselementen 16a verzichtet.

Figur 5 zeigt nun einen Schnitt durch das zweite Verbindungselement 10, wobei der Schnitt durch die in Figur 4a angedeutete Ebene A geführt ist. Das zweite Verbindungselement 10 weist einen ersten Verbindungsabschnitt 13b auf, welcher zur Verbindung mit der zweiten Halterung 3 dient, und einen zweiten Verbindungsabschnitt 14b, der zur Verbindung mit dem flexiblen Mittelteil 8, genauer mit dem zweiten Anschlussabschnitt 28, dient. Der zweite Verbindungsabschnitt 14b ist im vorliegenden Ausführungsbeispiel durch eine Schraubenverbindung 20 mit dem flexiblen Mittelteil 8 verbunden, jedoch liegt die Schraubenverbindung 20 vor bzw. hinter der Schnittebene sodass lediglich das Verbindungsmittel für die Verbindungsleiste 47b (siehe Figur 4 und 4a) zu sehen ist.

Der erste Verbindungsabschnitt 13b bildet dabei die hülsenförmigen Führungselemente 16b aus, wobei eines der Führungselemente 16b im Schnitt deutlich zu erkennen ist und alle Führungselemente 16b analog aufgebaut sind. Das geschnittene Führungselement 16b umgreift das Aufnahmeelement 15b vollständig, wobei zwischen Führungselement 16b und Aufnahmeelement 15b eine Buchse 38b aus Kunststoff vorgesehen ist. Diese Buchse 38b ist in das Führungselement 16b eingepresst und weist auf der Innenseite axiale Schlitze auf, um einerseits die Drehung des Führungselements 16b um die zweite Drehachse 12 und andererseits die translatorische Verschiebung des Führungselements 16b entlang dem Aufnahmeelement 15b zu ermöglichen.

In Figur 6 ist ein Schnitt durch eines der Befestigungselemente 17b dargestellt, wobei vom zweiten Verbindungselement 10 lediglich die Verbindungsleiste 47b in der Schnittebene liegt, welche Schnittebene der in Fig. 4a angedeuteten Ebene B entspricht. Dabei ist im geschnittenen Befestigungselement 17b zu erkennen, dass die Befestigungselemente 17b im vorliegenden Ausführungsbeispiel gemeinsam mit der zweiten Halterung 3 ausgeformt sind, etwa in einem Spritzguss- oder Extrusionsverfahren, und dass das Aufnahmeelement 15b durch die Befestigungselemente 17b geführt ist. In alternativen Ausführungsvarianten der Erfindung können die Befestigungselemente 17a,b auch anders an den Halterungen 2,3 befestigt sein, etwa mittels verschraubter oder verschweißter Konsolen.

In den Figuren 5 und 6 ist ebenfalls deutlich zu erkennen, dass der zweite Anschlussabschnitt 27 einen Fortsatz 29b aufweist, welcher das Aufnahmeelement 15b bzw. die Befestigungselemente 17b und die Führungselemente 16b teilweise umgreift, um den Spalt zwischen dem kreisbogenförmigen Abschnitt der äußeren Begrenzungswand 48b und dem zweiten Verbindungselement 10 möglichst klein zu halten.

Es versteht sich dabei von selbst, dass aufgrund des analogen Aufbaus des ersten Verbindungselements 9 bzw. der Befestigungselemente 17a, wie bereits zuvor, auf die Wiederholung der Ausführungen zu den Verbindungsabschnitten 13a bzw. 14a, der Buchse 38a und dem Fortsatz 29a verzichtet wird. Den einzigen Unterschied bildet die Verbindung des zweiten Verbindungsabschnitts 14a mit dem ersten Anschlussabschnitt 27, der, wie bereits zuvor erwähnt, als Schnellverschluss-Trenneinrichtung 21 ausgebildet ist, auf die in der Folge näher eingegangen wird.

Die Figuren 7 bis 9 zeigen jeweils Detailansichten zur Schnellverschluss-Trenneinrichtung 21 in einer verriegelten Position. Die Schnellverschluss-Trenneinrichtung 21 dient zum raschen Herstellen oder Trennen der Verbindung zwischen dem ersten Verbindungselement 9 und dem flexiblen Mittelteil 8, um, beispielsweise beim Koppeln oder Entkoppeln der Fahrzeugteile 33,34, die Seitenwandverkleidung 1 schnell und unkompliziert, also ohne die Zuhilfenahme von aufwändigem Spezialwerkzeug, zu trennen bzw. wieder zu verbinden. Die Schnellverschluss-Trenneinrichtung 21 umfasst dabei ein Betätigungselement 24, der mit einem Schiebeelement 25 in Wirkverbindung steht. In der dargestellten verriegelten Position ist das Schiebeelement 25 sowohl durch eine zweite Aufnahme 44, welche vom zweiten Verbindungsabschnitt 14a des ersten Verbindungselements 9 ausgebildet ist, als auch durch eine dritte Aufnahme 45, die vom ersten Anschlussabschnitt 27 ausgebildet ist, geführt ist, sodass eine formschlüssige Verbindung zwischen erstem Verbindungselement 9 und flexiblem Mittelteil 8 hergestellt ist. Zusätzlich dazu ist das Schiebeelement 25 auch durch eine erste, ebenfalls vom ersten Anschlussabschnitt 27 ausgebildete, Aufnahme 43 geführt, die zur Fixierung des Schiebeelements 25 in einer entsperrten Position dient. Wie aus Fig. 9 ersichtlich, weißt das Betätigungselement 24 einen Betätigungsabschnitt 23 auf, der auf der den Schwenkachsen 6,7 gegenüberliegenden Seite des flexiblen Mittelteils 8 ausgebildet ist, also vom Innenraum des Übergangs zugänglich ist.

Zur Entriegelung der Schnellverschluss-Trenneinrichtung 21 wird durch Betätigen des Betätigungsabschnitts 23 mit einem geeigneten Werkzeug, beispielsweise durch einen entsprechenden Spezialschlüssel der in den als Ausnehmung ausgebildeten Betätigungsabschnitt 23 einführbar ist, das Betätigungselement 24 gedreht, sodass ein mit dem Schiebeelement 25 im Eingriff stehender Hebelarm 42 des Betätigungselements 24 das Schiebeelement 25 aus der zweiten 44 und dritten Aufnahme 45 hinaus bewegt. Sind alle Schnellverschluss-Trenneinrichtungen 21 in der entriegelten Position, so lässt sich das flexible Mittelteil 8 um die zweite Drehachse 12 wie eine Schwenktüre ausschwenken. Zur Verriegelung der Schnellverschluss-Trenneinrichtung 21 werden die Schritte in umgekehrter Reihenfolge ausgeführt, wobei zuerst die Aufnahmen 43,44,45 fluchtend angeordnet werden müssen. Es versteht sich dabei von selbst, dass in alternativen Ausführungsvarianten auch andere Mechanismen für die Schnellverschluss-Trenneinrichtung 21 in Frage kommen, etwa Hakenmechanismen, Rastemechanismen oder anders gestaltete Schiebemechanismen.

Die Figuren 10a bis 10c zeigen nun abschließend die Seitenwandverkleidung 1 in der Ausgangsstellung, sowie bei einer relativen Verschiebung der Fahrzeugteile 33,34 zueinander, einmal in einer verkürzten Stellung, wie sie etwa bei einer Kurvenfahrt auf der Kurveninnenseite auftritt, und in einer gelängten Stellung, wie sie etwa bei einer Kurvenfahrt auf der Kurvenaußenseite auftritt.

In der in Figur 10a abgebildeten Ausgangsstellung sind die beiden Fahrzeugteile 33,34 nicht zueinander verschwenkt, sodass eine auf der gegenüberliegenden Seite des Faltenbalgs 35 angebrachte Seitenwandverkleidung 1 im Wesentlichen in derselben Stellung verweilt. An der ersten Befestigungskonsole 4 sind ein erster Anschlag 39a und ein zweiter Anschlag 40a ausgebildet, welche die Schwenkbewegung der ersten Halterung 2 um die erste Schwenkachse 6 begrenzen, indem in der einen Schwenkrichtung der erste Anschlag 39a die Stützwand 49a der ersten Halterung 2 kontaktiert und in der anderen Schwenkrichtung der zweite Anschlag 40a einen von der Stützwand 49a ausgebildeten Gegenanschlag 41a kontaktiert.

Die erste Halterung 2 ist in der Ausgangsstellung also frei schwenkbar in beide Schwenkrichtungen. Der flexible Mittelteil 8 ist über das erste Verbindungselement 9 um die erste Drehachse 11 drehbar an die erste Halterung 2 und über das zweite Verbindungselement 10 um die zweite Drehachse 12 drehbar an die zweite Halterung 3 angebunden. Durch die zuvor beschriebene Spannung des flexiblen Mittelteils 8 durch die Spannseile 19 bzw. durch die Drehfedern 32a,b (nicht dargestellt) ist der flexible Mittelteil 8 in der Ausgangsstellung nach außen, also in die den Schwenkachsen 6,7 entgegengesetzte Richtung bzw. in Richtung der Mitte des Übergangs, gewölbt. Die Drehposition der Verbindungselemente 9, 10 relativ zu den Drehachsen 11, 12 stellt sich damit von selbst ein.

In Figur 10b ist die Seitenwandverkleidung 1 in einer verkürzten Stellung zu sehen. Durch die Relativbewegung der Fahrzeugteile 33,34 sind die erste 4 bzw. die zweite Befestigungskonsole 5 aufeinander zu bewegt, ist also der Abstand zwischen den Befestigungskonsolen 4,5 kleiner als in der Ausgangsstellung. Um sich dieser Betriebsposition anzupassen ist es zu einer Schwenkbewegung der Halterungen 2,3 um die entsprechenden Schwenkachsen 6,7 gekommen. Im abgebildeten Fall ist bereits die Grenze der Schwenkbewegung erreicht, da die ersten Anschläge 39a,b bereits die Stützwände 49a,b der entsprechenden Halterungen 2,3 kontaktieren. Gleichzeitig ist es zu einer Drehung der Verbindungselemente 9, 10 um die entsprechenden Drehachsen 11, 12 nach außen gekommen, die die Schwenkbewegung der Halterungen 2,3 teilweise kompensiert. Die Drehbewegung der Verbindungselemente 9, 10 um die Drehachsen 11, 12 stellt sich wiederum von selbst ein, wobei der flexible Mittelteil 8 in der verkürzten Stellung stärker gewölbt ist als in der Ausgangsstellung. Kommt es ausgehend von der dargestellten Stellung zu einer weiteren Annäherung der Fahrzeugteile 33,34 bzw. der Befestigungskonsolen 4,5, so kann diese durch eine weitere Drehbewegung der Verbindungselemente 9, 10 und einer damit einhergehenden weiteren Wölbung des flexiblen Mittelteils 8 kompensiert werden.

Figur 10c zeigt die Seitenwandverkleidung 1 in einer gelängten Stellung, bei der die Fahrzeugteile 33,34 bzw. die Befestigungskonsolen 4,5 durch eine Relativbewegung der Fahrzeugteile 33,34 voneinander weg bewegt sind, also der Abstand zwischen den Befestigungskonsolen 4,5 größer ist als in der Ausgangsstellung. Um sich dieser Betriebsposition anzupassen, sind die Halterungen 2,3 um die Schwenkachsen 6,7 verschwenkt und zwar in die entgegengesetzte Richtung wie in der verkürzten Stellung. Auch im hier abgebildeten Fall ist keine weitere Schwenkbewegung der Halterungen 2,3 mehr möglich, da die zweiten Anschläge 40a,b bereits die Gegenanschläge 41a,b kontaktieren. Ganz allgemein ist die Begrenzung der Schwenkbewegung der Halterungen 2,3 unabhängig von der Schwenkrichtung dann möglich, wenn zwei Anschlagsflächen einander kontaktieren. Ob die Anschläge an den Befestigungskonsolen 4,5 oder an den Halterungen 2,3 angeordnet sind bzw. als Abschnitt davon ausgebildet sind, spielt für die Funktion an sich keine Rolle und obliegt der konstruktiven Freiheit des Fachmanns. Die Verbindungselemente 9, 10 sind gegenüber der Ausgangsstellung nach innen verdreht, um die Schwenkbewegung zumindest teilweise auszugleichen, wobei der flexible Mittelteil 8 noch immer eine Wölbung aufweist. Kommt es ausgehend von der dargestellten Stellung zu einer weiteren Auseinanderbewegung der Fahrzeugteile 33,34, so kann diese durch eine weitere Drehung der Verbindungselemente 9, 10 bei gleichzeitiger Verringerung der Wölbung des flexiblen Mittelteils 8 kompensiert werden.

Durch die Bewegung der ersten 11 bzw. zweiten Drehachse 12 auf einer Kreisbahn um die entsprechende erste 6 bzw. zweite Schwenkachse 7 wird ein Teil der Änderung des Abstands zwischen den Fahrzeugteilen 33,34 bzw. den Befestigungskonsolen 4,5 kompensiert. Der andere Teil der Änderung des Abstands zwischen den Fahrzeugteilen 33,34 bzw. den Befestigungskonsolen 4,5 wird demnach entsprechend durch die Drehung des ersten 9 bzw. zweiten Verbindungselements 10 um die entsprechende erste 11 bzw. zweite Drehachse 12 in Verbindung mit der Änderung der Wölbung des flexiblen Mittelteils 8 kompensiert.

Ein Vorteil der erfindungsgemäßen Seitenwandverkleidung 1 liegt nun darin, dass sich der flexible Mittelteil 8 schnell und unkompliziert mit den beiden Verbindungselementen 9, 10 verbinden lässt. Dadurch wird einerseits die Montage erleichtert, da die erste Halterung 2 und die zweite Halterung 3 separat voneinander befestigt werden können und nicht die gesamte Seitenwandverkleidung 1 in einem Teil montiert werden muss. In einem zweiten Schritt wird dann der zweite Anschlussabschnitt 28 des flexiblen Mittelteils 8 über die Schraubenverbindungen 20 mit dem zweiten Verbindungsabschnitt 14b des zweiten Verbindungselements 10 verbunden. Da sich der flexible Mittelteil 8 um die zweite Drehachse 12 drehen lässt, sind die Schraubenverbindungen 20 leicht zugänglich. In einem dritten Schritt wird dann der erste Anschlussabschnitt 27 in Richtung der ersten Halterung 2 bzw. in Richtung des zweiten Verbindungsabschnitts 14a des ersten Verbindungselements 9 bewegt, um mittels der Schnellverschluss-Trenneinrichtungen 21, deren Betätigungsabschnitte 23 von der den Passagieren zugewendeten Seite der Seitenwandverkleidung 1 zugänglich ist, verbunden zu werden. Dabei ist es von Vorteil, dass sowohl die Halterungen 2,3 als auch der flexible Mittelteil 8 jeweils für sich ein Gewicht von weniger als 30 kg aufweisen. Im vorliegenden Ausführungsbeispiel beträgt das Gesamtgewicht der Seitenwandverkleidung 1 lediglich etwa 60 kg, welche sich annähernd gleichmäßig auf die Halterungen 2,3 und das flexible Mittelteil 8 aufteilen, sodass sowohl erste 2 als auch zweite Halterung 3 bzw. der flexible Mittelteil 8 jeweils etwa 20 kg wiegen. Diese Gestaltung ermöglicht die Montage der gesamten Seitenwandverkleidung 1 durch nur eine Person, da die erste 2 und zweite Halterung 3 bzw. der flexible Mittelteil 8 einzeln montiert und gehandhabt werden. Damit werden auch arbeitnehmerrechtliche Auflagen in Bezug auf das zu hebende Gesamtgewicht erfüllt, während nach dem Stand der Technik immer die gesamte vormontierte Seitenwandverkleidung in einem gehoben bzw. montiert werden muss, was aufgrund des hohen Gesamtgewichts der vormontierten Seitenwandverkleidung für eine Person im Sinne der arbeitsrechtlichen Bestimmungen nicht zulässig ist.

Insbesondere bei der Koppelung und Entkoppelung der Fahrzeugteile 33,34 lässt sich dieser Mechanismus ebenfalls ausnützen, da somit eine sehr schnelle und unkomplizierte Herstellung bzw. Trennung der Seitenwandverkleidung 1 sicher gestellt wird.

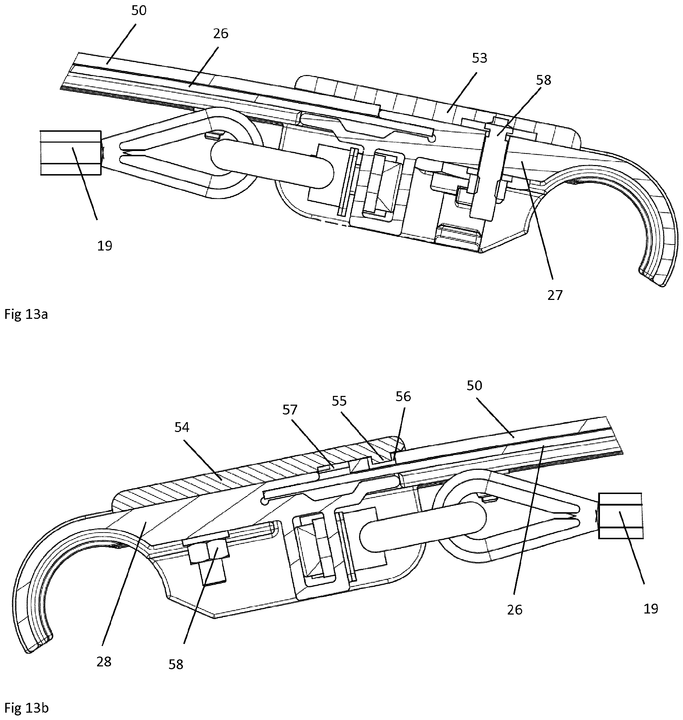

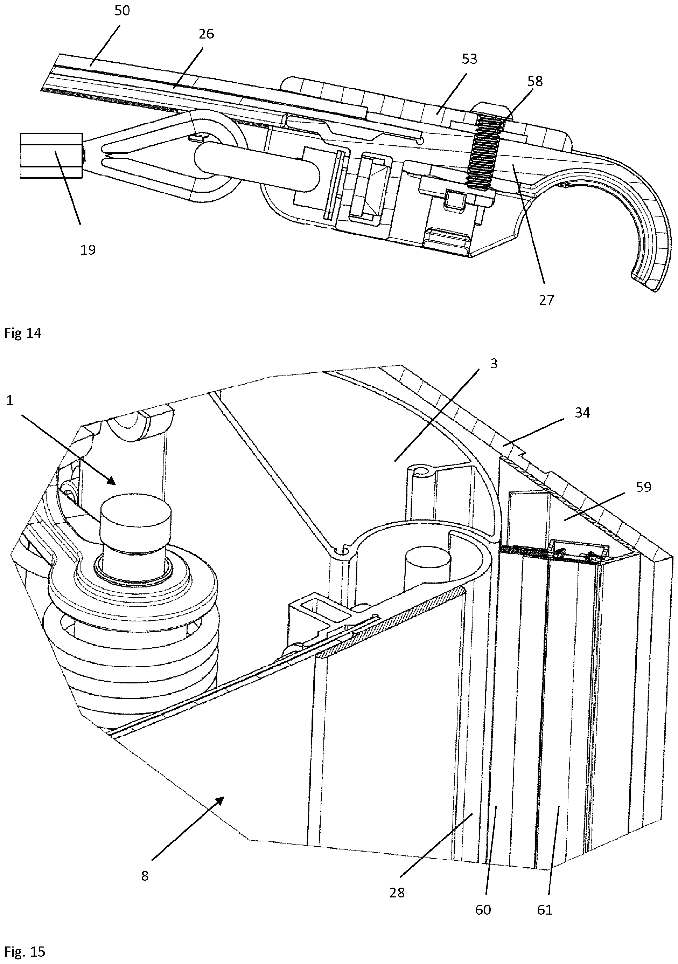

Die Figuren 11 bis 14 zeigen eine Ausführungsvariante der Erfindung, in der eine flexible Kunststoffplatte 50 am flexiblen Mittelteil 8 befestigt ist. Der Übersichtlichkeit halber wurde auf eine maßstäbliche Darstellung verzichtet. Wie in Fig. 11 und 12 zu erkennen ist, deckt die Kunststoffplatte 50 einen Großteil der flexiblen Mittelplatte 26 des flexiblen Mittelteils 8 ab. Die flexible Mittelplatte 26 an sich stellt eine große Fläche zur Verfügung, die zur Darstellung von Informationen, wie Fahrgastinformationen oder Werbeinformationen, genutzt werden kann. Um diese Nutzung zu ermöglichen, ist die Kunststoffplatte 50 durchsichtig, sprich transparent, ausgebildet, um eine zwischen der Kunststoffplatte 50 und der flexiblen Mittelplatte 26 angeordnete Informationsträger-Platte 52, beispielsweise ein bedrucktes Plakat, sichtbar zu machen. Durch die Kunststoffplatte 50 wird die Informationsträger-Platte 52 einerseits fixiert und gehalten und andererseits vor äußeren Einflüssen geschützt. Die flexible Kunststoffplatte 50 ist, wie in den Figuren 13 und 14 ausführlich erläutert wird, mittels eines leistenförmigen Klemmrahmens 53 und eines leistenförmigen Halterahmens 54 am flexiblen Mittelteil 8, genauer an den beiden Anschlussabschnitten 27,28, befestigt. Sowohl der Klemmrahmen 53 als auch der Halterahmen 54 können an ihrer Unterkante auf der der Mittelplatte 26 zugewandten Seite einen Anschlag für die Kunststoffplatte 50 aufweisen, auf dem die Kunststoffplatte 50 aufliegt bzw. aufsitzt. Einer der Rahmen 53,54, im vorliegen Ausführungsbeispiel der Klemmrahmen 53, weist drei Ausnehmungen 51 auf, durch welche im montierten Zustand (siehe Fig. 12) die Betätigungsabschnitte 23 der drei Betätigungselemente 24 zugänglich sind.

In Figur 13a eine Schnittansicht des am flexiblen Mittelteil 8 befestigten Klemmrahmens 53 abgebildet. Wie deutlich zu erkennen ist, ist die Kunststoffplatte 50 auf der den nicht dargestellten Schwenkachsen 6,7 abgewandten Seite vor der Mittelplatte 26 angeordnet. Die zwischen Kunststoffplatte 50 und Mittelplatte 26 angeordnete Informationsträger-Platte 52 ist aufgrund ihrer geringen Dicke nicht gesondert gekennzeichnet. Ein seitlicher Endabschnitt der Kunststoffplatte 50 ist zwischen dem Klemmrahmen 53 und der Mittelplatte 26 aufgenommen und wird durch das Befestigen des Klemmrahmens 53 fest geklemmt. Die Befestigung des Klemmrahmens 53 erfolgt über weitere Befestigungsmittel 58, hier Gewindebolzen, die über die Längserstreckung des Klemmrahmens 53 verteilt sind und am ersten Anschlussabschnitt 27 des flexiblen Mittelteils 8 befestigt sind. Die weitere Befestigungsmittel 58 sind dabei im vorliegenden Ausführungsbeispiel fest mit dem Klemmrahmen 53 verbunden und ragen von diesem ab. Zur Befestigung umfassen die Befestigungsmittel 58 Schraubenmuttern, die von der Rückseite der Seitenwandverkleidung 1 aus montiert werden. Da die Befestigungsmittel 58 nur von der den nicht dargestellten Schwenkachsen 6,7 zugewandten Seite aus, also von der Rückseite aus, zugänglich sind, kann die Kunststoffplatte 50 nur montiert bzw. demontier werden, wenn die Seitenwandverkleidung 1 gelöst ist. So kann die Informationsträger-Platte 52 nur durch befugtes Personal ausgetauscht werden, welches die Seitenwandverkleidung 1 erfindungsgemäß schwenktürartig lösen kann.

Fig. 13b zeigt eine Schnittansicht des am flexiblen Mittelteil 8 befestigten Halterahmens 53, welcher die dem Klemmrahmen 53 gegenüberliegende Seite der Kunststoffplatte 50 fixiert. Der Halterahmen 54 ist analog zum Klemmrahmen 54 über weitere Befestigungsmittel 58 am zweiten Anschlussabschnitt 28 des flexiblen Mittelteils 8 befestigt. Zwischen der Mittelplatte 26 und dem Halterahmen 54 ist eine Tasche 57 ausgebildet, in die ein Endabschnitt der Kunststoffplatte 50 eingeführt ist. Die Tasche 57 weist einen Toleranzbereich auf, in dem die Kunststoffplatte 50 verschiebbar gehalten ist, sodass die Kunststoffplatte 50 während des Betriebs, etwa bei Kurvenfahrten, Relativbewegungen ausgleichen kann. Der Halterahmen 54 übt dabei eine geringere Klemmkraft auf die Kunststoffplatte 50 aus als der Klemmrahmen 53, um die Relativbewegung zu ermöglichen. Zur Fixierung der Kunststoffplatte 50 weist diese zumindest eine Öffnung 56 auf, in die eine Nase 55 des Halterahmens 54 eingreift. Zwischen der Nase 55 und der Öffnung 56 ist ebenfalls ein Toleranzbereich ausgebildet.

In Figur 14 ist eine alternative Befestigungsmöglichkeit der Rahmen 53,54 an den Anschlussabschnitten 27,28 an Hand des Halterahmens 54 dargestellt. Dabei sind die weiteren Befestigungsmittel 58 als Schrauben ausgebildet, die von der Vorderseite der Seitenwandverkleidung 1, also von der den nicht dargestellten Schwenkachsen 6,7 abgewandten Seite, aus zugänglich sind. So wird ein schneller Wechsel der Informationsträger-Platte 52 ermöglicht, da die Seitenwandverkleidung 1 zum Austausch der Informationsträger-Platte 52 nicht geöffnet werden muss. Es ist jedoch notwendig die weiteren Befestigungsmittel 58 über geeignete Auslegung vor der Betätigung durch Unbefugte zu schützen, also eine sogenannte Vandalismus-Sicherung vorzusehen.

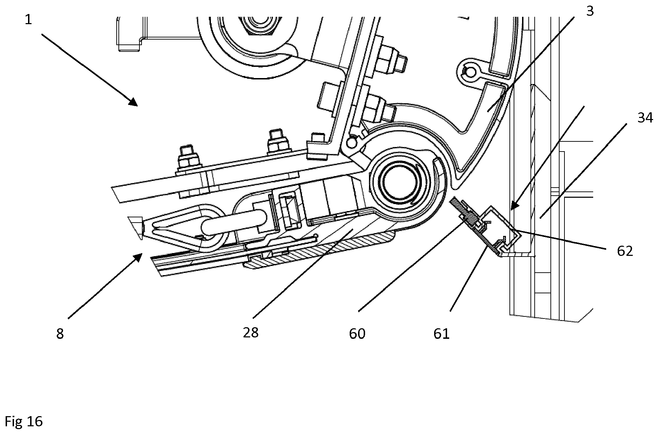

Die Figuren 15 und 16 zeigen eine Ausführungsvariante eines erfindungsgemäßen Übergangs zwischen den Fahrzeugteilen 33,34 wobei ein als Bürstenhalten ausgebildetes Profilblech 59 an einem der Fahrzeugteile 33,34 angebracht ist. Dieses Profilblech 59 bildet eine Halterung für eine Bürste 60 aus, die einen Spalt zwischen der ersten 2 oder zweiten Halterung 3, genauer zwischen der äußeren Begrenzungswand 48a, b, und dem entsprechenden Fahrzeugteil 33,34 überbrückt. Um den Übergang auszuleuchten, ist ein Leuchtmittel 61, wie etwa eine LED-Leuchtleiste, am Profilblech 59 angebracht. Wie in Fig. 16 deutlich zu erkennen ist, ist das Leuchtmittel 61 in eine vom Profilblech 59 ausgebildete Schiene 62 eingesetzt bzw. in dieser verrastet.

Es versteht sich dabei von selbst, dass es sich bei dem beschriebenen Ausführungsbeispiel lediglich um eine bevorzugte Ausführungsvariante der Erfindung handelt. Es ist daher für den Fachmann ohne weiteres ersichtlich, dass eine Reihe an unterschiedlichen Gestaltungsmöglichkeiten denkbar sind, welche sich alle im Rahmen der Erfindung bewegen: so können etwa sowohl das erste 9 als auch das zweite Verbindungselement 10 über Schraubenverbindungen miteinander verbunden sein, es kann aber auch für beide Verbindungselemente 9, 10 jeweils zumindest eine Schnellverschluss-Trenneinrichtung 21 vorgesehen sein. Auch können Schraubenverbindung und Schnellverschluss-Verbindungseinrichtung 21 an den jeweils anderen Verbindungselementen 9, 10 angeordnet sein. Gleichwohl ist es denkbar, dass lediglich das erste 9 oder das zweite Verbindungselement 10 vorgesehen ist, demnach nur eine Seite des flexiblen Mittelteils 8 drehbar an einer der Halterungen 2,3 angebunden ist, während die andere Seite über eine alternative Anbindungsvariante, etwa drehstarr, an der anderen Halterung 2,3 angebunden ist.

### BEZUGSZEICHENLISTE

- 1: Seitenwandverkleidung
- 2: erste Halterung
- 3: zweite Halterung
- 4: erste Befestigungskonsole
- 5: zweite Befestigungskonsole
- 6: erste Schwenkachse
- 7: zweite Schwenkachse
- 8: flexibler Mittelteil
- 9: erstes Verbindungselement
- 10: zweites Verbindungselement
- 11: erste Drehachse
- 12: zweite Drehachse
- 13a,b: erster Verbindungsabschnitt
- 14a,b: zweiter Verbindungsabschnitt
- 15a,b: zylindrisches Aufnahmeelement
- 16a,b: Führungselement
- 17a,b: Befestigungselement
- 18a,b: Positionierfederelement
- 19: Spannseil
- 20: Schraubenverbindung
- 21: Schnellverschluss-Verbindungseinrichtung
- 22: Schiebeelement
- 23: Betätigungsabschnitt
- 24: Betätigungselement
- 25: Schiebeelement
- 26: flexible Mittelplatte
- 27: erster Anschlussabschnitt
- 28: zweiter Anschlussabschnitt
- 29a,b: Fortsatz
- 30a,b: erste Abdeckung
- 31a,b: zweite Abdeckung
- 32a,b: Drehfeder
- 33: erstes Fahrzeugteil
- 34: zweites Fahrzeugteil
- 35: Faltenbalg
- 36: Trenneinrichtung
- 37: Brückenplattenboden
- 38: Buchse
- 39a,b: erster Anschlag
- 40a,b: zweiter Anschlag
- 41a,b: Gegenanschlag
- 42: Hebelarm
- 43: erste Aufnahme
- 44: zweite Aufnahme
- 45: dritte Aufnahme
- 46a,b: Scharnier
- 47a,b: Verbindungsleiste
- 48a,b: äußere Begrenzungswand
- 49a,b: Stützwand
- 50: flexible Kunststoffplatte
- 51: Ausnehmung
- 52: Informationsträger-Platte
- 53: Klemmrahmen
- 54: Halterahmen
- 55: Nase
- 56: Öffnung
- 57: Tasche
- 58: weitere Befestigungsmittel
- 59: Profilblech
- 60: Bürste
- 61: Leuchtmittel
- 62: Schiene

## Patentansprüche

1. Seitenwandverkleidung (1) für die Innenseite eines Übergangs zwischen zwei gelenkig miteinander verbundenen Fahrzeugteilen (33,34), die Seitenwandverkleidung (1) umfassend
- einen flexiblen, wölbbaren Mittelteil (8),
- eine erste Halterung (2), welche um eine erste Schwenkachse (6) schwenkbar an zumindest eine erste Befestigungskonsole (4) angebunden ist,
- eine zweite Halterung (3), welche um eine zweite Schwenkachse (7) schwenkbar an zumindest eine zweite Befestigungskonsole (5) angebunden ist,
wobei der flexible Mittelteil (8) zwischen der ersten (2) und der zweiten Halterung (3) angeordnet ist und mit seinen der ersten (2) und zweiten Halterung (3) zuweisenden Endbereichen an die erste (2) und zweite Halterung (3) angebunden ist,
**dadurch gekennzeichnet, dass**
die Anbindung des flexiblen Mittelteils (8) an die erste (2) und/oder die zweite Halterung (3) jeweils relativ zur jeweiligen Halterung (2,3) drehbar ausgebildet ist.

2. Seitenwandverkleidung (1) nach Anspruch 1, **dadurch gekennzeichnet, dass** die Anbindung des flexiblen Mittelteils (8) an die erste Halterung (2) über ein erstes, um eine erste Drehachse (11) verdrehbares Verbindungselement (9) erfolgt und/oder dass die Anbindung des flexiblen Mittelteils (8) an die zweite Halterung (3) über ein zweites, um eine zweite Drehachse (12) verdrehbares Verbindungselement (10) erfolgt.

3. Seitenwandverkleidung (1) nach Anspruch 2, **dadurch gekennzeichnet, dass** das erste (9) bzw. das zweite Verbindungselement (10) jeweils einen ersten Verbindungsabschnitt (13a, 13b) zur Verbindung mit der ersten (2) bzw. zweiten Halterung (3) und einen zweiten Verbindungsabschnitt (14a,14b) zur Verbindung mit dem flexiblen Mittelteil (8) aufweist.

4. Seitenwandverkleidung (1) nach einem der Ansprüche 2 bis 3, **dadurch gekennzeichnet, dass** an der ersten (2) bzw. zweiten Halterung (3) jeweils zumindest ein zylindrisches Aufnahmeelement (15a,15b) angeordnet ist, welches die erste (11) bzw. die zweite Drehachse (12) ausbildet.

5. Seitenwandverkleidung (1) nach Anspruch 4, **dadurch gekennzeichnet, dass** der erste
Verbindungsabschnitt (13a,13b) zumindest ein hülsenartiges Führungselement (16a,16b) aufweist, welches in Wirkverbindung mit dem zumindest einen
Aufnahmeelement (15a,15b) steht, um die Verdrehbarkeit des ersten (9) bzw. zweiten Verbindungselementes (10) zu ermöglichen
und dass das Aufnahmeelement (15a,15b) über zumindest ein hülsenförmiges Befestigungselement (17a,17b) an der ersten (2) bzw. zweiten Halterung (3) befestigt ist.

6. Seitenwandverkleidung (1) nach einem der Ansprüche 4 bis 5, **dadurch gekennzeichnet, dass** das erste (9) bzw. zweite Verbindungselement (10) translatorisch verschiebbar an der ersten (2) bzw. zweiten Halterung (3) angeordnet ist, vorzugsweise indem das zumindest eine
Führungselement (16a,16b) entlang der ersten (11) bzw. zweiten Drehachse (12) des Aufnahmeelementes (15a,15b) translatorisch verschiebbar angeordnet ist.

7. Seitenwandverkleidung (1) nach einem der Ansprüche 2 bis 6, **dadurch gekennzeichnet, dass** zumindest ein, vorzugsweise auf das zumindest eine Führungselement (16a,16b) wirkendes, Positionierfederelement (18a,18b) vorgesehen ist, um das erste (9) bzw. zweite Verbindungselement (10) entlang der ersten (11) bzw. zweiten Drehachse (12) zu positionieren.

8. Seitenwandverkleidung (1) nach einem der Ansprüche 3 bis 7, **dadurch gekennzeichnet, dass** der zweite Verbindungsabschnitt (14a,14b) über zumindest eine Schnellverschluss-Verbindungseinrichtung (21) mit dem flexiblen Mittelteil (8) verbindbar ist.

9. Seitenwandverkleidung (1) nach einem der Ansprüche 3 bis 8, **dadurch gekennzeichnet, dass** der flexible Mittelteil (8) eine flexible Mittelplatte (26) und zwei Anschlussabschnitte (27,28) umfasst, wobei einer der Anschlussabschnitte (27,28) mit dem zweiten Verbindungsabschnitt (14a) des ersten Verbindungselementes (9) verbunden ist und/oder dass der andere Anschlussabschnitt (27,28) mit dem zweiten Verbindungsabschnitt (14b) des zweiten Verbindungselementes (10) verbunden ist.

10. Seitenwandverkleidung (1) nach Anspruch 9, **dadurch gekennzeichnet, dass** der flexible Mittelteil (8) eine flexible Kunststoffplatte (50) umfasst, welche flexible Kunststoffplatte (50) die den Schwenkachsen (6,7) abgewandten Seite der flexiblen Mittelplatte (26) zumindest abschnittsweise, vorzugsweise vollständig, abdeckt.

11. Seitenwandverkleidung (1) nach Anspruch 10, **dadurch gekennzeichnet, dass** die flexible Kunststoffplatte (50) aus zumindest teilweise durchsichtigem, vorzugsweise aus durchsichtigem, Polycarbonat besteht und dass zwischen der flexiblen Mittelplatte (26) und der flexiblen Kunststoffplatte (50) eine, vorzugsweise bedruckte, Informationsträger-Platte (52) angeordnet ist.

12. Seitenwandverkleidung (1) nach Anspruch 10, **dadurch gekennzeichnet, dass** die flexible Kunststoffplatte (50) mittels eines Klemmrahmens (53) und eines Halterahmens (54) am flexiblen Mittelteil (8) befestigt ist, wobei die Kunststoffplatte (50) durch den Klemmrahmen (53) festgeklemmt ist und im Halterahmen (54) relativ bewegbar gehalten ist, um Relativbewegungen der flexiblen Mittelplatte (26) auszugleichen.

13. Seitenwandverkleidung (1) nach Anspruch 12, **dadurch gekennzeichnet, dass** der Klemmrahmen (53) an einem der Anschlussabschnitte (27, 28) und der Halterahmen (54) am anderen Anschlussabschnitt (28, 27) des flexiblen Mittelteils (8) befestigt ist.

14. Seitenwandverkleidung (1) nach Anspruch 12 oder 13, **dadurch gekennzeichnet, dass** der Klemmrahmen (53) und der Halterahmen (54) jeweils an der in Richtung der Schwenkachsen (6,7) gesehen unteren Kante einen Anschlag für die Fixierung der flexiblen Kunststoffplatte (50) aufweisen.

15. Seitenwandverkleidung (1) nach einem der Ansprüche 1 bis 14, **dadurch gekennzeichnet, dass** die erste (2) bzw. zweite Halterung (3) an der in Richtung der Schwenkachsen (6,7) gesehen oberen und/oder unteren Kante eine elastisch verformbare erste Abdeckung (30a,30b) aufweist, um durch Verformung der ersten Abdeckung (30a,30b) eine Relativbewegung zwischen den Fahrzeugteilen (33,34) parallel zu den Schwenkachsen (6,7) zumindest teilweise aufnehmen zu können.

16. Seitenwandverkleidung (1) nach einem der Ansprüche 1 bis 15, **dadurch gekennzeichnet, dass** der flexible Mittelteil (8) an der in Richtung der Schwenkachsen (6,7) gesehen oberen und/oder unteren Kante eine elastisch verformbare zweite Abdeckung (31a,31b) aufweist, um durch Verformung der zweiten Abdeckung (31a,31b) eine Relativbewegung zwischen den Fahrzeugteilen (33,34) parallel zu den Schwenkachsen (6,7) zumindest teilweise aufnehmen zu können.

17. Seitenwandverkleidung (1) nach einem der Ansprüche 1 bis 16, **dadurch gekennzeichnet, dass** am flexiblen Mittelteil (8) zumindest ein, vorzugsweise drei, in einer Richtung quer zu den Schwenkachsen (6,7) verlaufendes Spannseil (19) angeordnet ist/sind, um die Wölbung des flexiblen Mittelteils (8) zu ermöglichen und dass die erste (2) bzw. die zweite Halterung (3) jeweils über zumindest eine Drehfeder (32a,32b) mit einem Drehmoment beaufschlagt ist, um den flexiblen Mittelteil (8) zu spannen.

18. System umfassend zwei gelenkig miteinander verbundene Fahrzeugteile (33,34) sowie einen zwischen den Fahrzeugteilen (33,34) angeordneten Übergang, wobei an der Innenseite des Übergangs eine Seitenwandverkleidung (1) nach einem der Ansprüche 1 bis 17 angebracht ist und wobei die erste Halterung (2) über die zumindest eine erste Befestigungskonsole (4) mit einem der Fahrzeugteile (33) direkt oder indirekt verbunden ist und die zweite Halterung (3) über die zumindest eine, zweite Befestigungskonsole (5) mit dem anderen Fahrzeugteil (34) direkt oder indirekt verbunden ist.

19. System nach Anspruch 18, **dadurch gekennzeichnet, dass** jeweils ein als Halterung für eine Bürste (60) zur Abdeckung eines Spalts zwischen Halterung (2,3) und Fahrzeugteil (33,34) ausgebildetes Profilblech (59) am ersten und/oder zweiten Fahrzeugteil (33,34) befestigt ist und dass das Profilblech (59) mit einem Leuchtmittel (61) versehen ist.

20. Verfahren zum Schließen einer Seitenwandverkleidung (1) für die Innenseite eines Übergangs zwischen zwei gelenkig miteinander verbundenen Fahrzeugteilen (33,34) während der Koppelung der beiden Fahrzeugteile (33,34), die Seitenwandverkleidung (1) umfassend
- einen flexiblen, wölbbaren Mittelteil (8),
- eine erste Halterung (2), welche um eine erste Schwenkachse (6) schwenkbar an zumindest eine direkt oder indirekt mit dem ersten Fahrzeugteil (33) verbundene erste Befestigungskonsole (4) angebunden ist,
- eine zweite Halterung (3), welche um eine zweite Schwenkachse (7) schwenkbar an zumindest eine direkt oder indirekt mit dem zweiten Fahrzeugteil (34) verbundene zweite Befestigungskonsole (5) angebunden ist,
**dadurch gekennzeichnet, dass** der flexible Mittelteil (8) relativ zur ersten Halterung (2) drehbar an der ersten Halterung (2) angebunden ist und die folgenden Verfahrensschritte durchgeführt werden:
- schwenktürartiges Drehen des flexiblen Mittelteils (8) relativ zur ersten Halterung (2) in Richtung der zweiten Halterung (3), bis der flexible Mittelteil (8) einen Großteil des Abstands zwischen den Fahrzeugteilen (33,34) überbrückt;
- Zusammenführen des flexiblen Mittelteils (8) und der zweiten Halterung (3), indem zumindest die erste Halterung (2) um die erste Schwenkachse (6) in Richtung der zweiten Halterung (3) geschwenkt wird, bis der flexible Mittelteil (8) den Abstand zwischen den Fahrzeugteilen (33,34) überbrückt;
- Betätigen zumindest einer Schnellverschluss-Verbindungseinrichtung (21) mittels derer der flexible Mittelteil (8) mit der zweiten Halterung (3) verbunden wird, um die Seitenwandverkleidung (1) in einer geschlossenen Stellung zu halten.

21. Verfahren zum Öffnen einer Seitenwandverkleidung (1) für die Innenseite eines Übergangs zwischen zwei gelenkig miteinander verbundenen Fahrzeugteilen (33,34) während der Entkoppelung der beiden Fahrzeugteile (33,34), die Seitenwandverkleidung (1) umfassend
- einen flexiblen, wölbbaren Mittelteil (8),
- eine erste Halterung (2), welche um eine erste Schwenkachse (6) schwenkbar an zumindest eine direkt oder indirekt mit dem ersten Fahrzeugteil (33) verbundene erste Befestigungskonsole (4) angebunden ist,
- eine zweite Halterung (3), welche um eine zweite Schwenkachse (7) schwenkbar an zumindest eine direkt oder indirekt mit dem zweiten Fahrzeugteil (34) verbundene zweite Befestigungskonsole (5) angebunden ist, **dadurch gekennzeichnet, dass** der flexible Mittelteil (8) relativ zur ersten Halterung (2) drehbar an der ersten Halterung (2) angebunden ist und die folgenden Verfahrensschritte durchgeführt werden:
- Lösen zumindest einer Schnellverschluss-Verbindungseinrichtung (21) mittels derer der flexible Mittelteil (8) mit der zweiten Halterung (3) verbunden wird;
- Trennen der Verbindung zwischen dem flexiblen Mittelteil (8) und der zweiten Halterung (3);
- schwenktürartiges Drehen des flexiblen Mittelteils (8) relativ zur ersten Halterung (2) in Richtung des ersten Fahrzeugteils (33).

## Claims

1. A side wall panel (1) for the inner side of a gangway between two vehicle parts (33, 34) articulated with one another, the side wall panel (1) comprising
- a flexible middle part (8), which can bulge,
- a first holder (2), which is attached to at least one first fastening bracket (4) so it is pivotable around a first pivot axis (6),
- a second holder (3), which is attached to at least one second fastening bracket (5) so it is pivotable around a second pivot axis (7),
wherein the flexible middle part (8) is arranged between the first (2) and the second holder (3) and is attached to the first (2) and second holder (3) with its end regions facing toward the first (2) and second holder (3),
**characterized in that** the attachment of the flexible middle part (8) to the first (2) and/or the second holder (3) is formed so it is rotatable in relation to the respective holder (2, 3).

2. The side wall panel (1) according to Claim 1, **characterized in that** the attachment of the flexible middle part (8) to the first holder (2) is performed via a first connecting element (9) pivotable around a first rotational axis (11), and/or the attachment of the flexible middle part (8) to the second holder (3) is performed via a second connecting element (10) pivotable around a second rotational axis (12).

3. The side wall panel (1) according to Claim 2, **characterized in that** the first (9) and the second connecting element (10) each have a first connecting section (13a, 13b) for connection to the first (2) or second holder (3), respectively, and a second connecting section (14a, 14b) for connection to the flexible middle part (8).

4. The side wall panel (1) according to any one of Claims 2 to 3, **characterized in that** at least one cylindrical receptacle element (15a, 15b), which forms the first (11) or the second rotational axis (12), is arranged on the first (2) or second holder (3), respectively.

5. The side wall panel (1) according to Claim 4, **characterized in that** the first connecting section (13a, 13b) has at least one sleeve-like guide element (16a, 16b), which is operationally connected to the at least one receptacle element (15a, 15b) to enable the pivoting capability of the first (9) or second connecting element (10), respectively, and the receptacle element (15a, 15b) is fastened via at least one sleeve-shaped fastening element (17a, 17b) to the first (2) or second holder (3), respectively.

6. The side wall panel (1) according to any one of Claims 4 to 5, **characterized in that** the first (9) and/or second connecting element (10) is arranged so it is translationally displaceable on the first (2) or second holder (3), respectively, preferably by the at least one guide element (16a, 16b) being arranged so it is translationally displaceable along the first (11) or second rotational axis (12), respectively, of the receptacle element (15a, 15b).

7. The side wall panel (1) according to any one of Claims 2 to 6, **characterized in that** at least one positioning spring element (18a, 18b), which preferably acts on the at least one guide element (16a, 16b), is provided to position the first (9) or second connecting element (10) along the first (11) or second rotational axis (12), respectively.

8. The side wall panel (1) according to any one of Claims 3 to 7, **characterized in that** the second connecting section (14a, 14b) is connectable via at least one quick-action-closure connecting unit (21) to the flexible middle part (8).

9. The side wall panel (1) according to any one of Claims 3 to 8, **characterized in that** the flexible middle part (8) comprises a flexible middle plate (26) and two attachment sections (27, 28), wherein one of the attachment sections (27, 28) is connected to the second connecting section (14a) of the first connecting element (9), and/or the other attachment section (27, 28) is connected to the second connecting section (14b) of the second connecting element (10).

10. The side wall panel (1) according to Claim 9, **characterized in that** the flexible middle part (8) comprises a flexible plastic plate (50), which flexible plastic plate (50) covers the side of the flexible middle plate (26) facing away from the pivot axes (6, 7) at least in sections, preferably completely.

11. The side wall panel (1) according to Claim 10, **characterized in that** the flexible plastic plate (50) consists of at least partially transparent, preferably transparent, polycarbonate, and a, preferably printed, information carrier plate (52) is arranged between the flexible middle plate (26) and the flexible plastic plate (50).

12. The side wall panel (1) according to Claim 10, **characterized in that** the flexible plastic plate (50) is fastened by means of a clamping frame (53) and a holding frame (54) on the flexible middle part (8), wherein the plastic plate (50) is fixedly clamped by the clamping frame (53) and is held so it is relatively movable in the holding frame (54) to compensate for relative movements of the flexible middle plate (26).

13. The side wall panel (1) according to Claim 12, **characterized in that** the clamping frame (53) is fastened on one of the attachment sections (27, 28) and the holding frame (54) is fastened on the other attachment section (28, 27) of the flexible middle part (8).

14. The side wall panel (1) according to Claim 12 or 13, **characterized in that** the clamping frame (53) and the holding frame (54) each have a stopper for the fixation of the flexible plastic plate (50) on the lower edge viewed in the direction of the pivot axes (6, 7).

15. The side wall panel (1) according to any one of Claims 1 to 14, **characterized in that** the first (2) and/or second holder (3) has an elastically deformable first cover (30a, 30b) on the upper and/or lower edge viewed in the direction of the pivot axes (6, 7), in order to at least partially absorb a relative movement between the vehicle parts (33, 34) parallel to the pivot axes (6, 7) by deformation of the first cover (30a, 30b).

16. The side wall panel (1) according to any one of Claims 1 to 15, **characterized in that** the flexible middle part (8) has an elastically deformable second cover (31a, 31b) on the upper and/or lower edge viewed in the direction of the pivot axes (6, 7), in order to at least partially absorb a relative movement between the vehicle parts (33, 34) parallel to the pivot axes (6, 7) by deformation of the second cover (31a, 31b).

17. The side wall panel (1) according to any one of Claims 1 to 16, **characterized in that** at least one, preferably three tensioning cables (19) extending in a direction transverse to the pivot axes (6, 7) is/are arranged on the flexible middle part (8) to enable the bulging of the flexible middle part (8), and a torque is applied to each of the first (2) and/or the second holder (3) via at least one rotational spring (32a, 32b) to tension the flexible middle part (8).

18. A system comprising two vehicle parts (33, 34) articulated with one another and a gangway arranged between the vehicle parts (33, 34), wherein a side wall panel (1) according to any one of Claims 1 to 17 is attached to the inner side of the gangway and wherein the first holder (2) is directly or indirectly connected via the at least one first fastening bracket (4) to one of the vehicle parts (33) and the second holder (3) is directly or indirectly connected via the at least one second fastening bracket (5) to the other vehicle part (34).

19. The system according to Claim 18, **characterized in that** a profile plate (59) formed as a holder for a brush (60) for covering a gap between holder (2, 3) and vehicle part (33, 34) is fastened on the first and/or second vehicle part (33, 34), respectively, and that the profile plate (59) is provided with a lighting means (61).

20. A method for closing a side wall panel (1) for the inner side of a gangway between two vehicle parts (33, 34) articulated with one another during the coupling of the two vehicle parts (33, 34), the side wall panel (1) comprising
- a flexible middle part (8), which can bulge,
- a first holder (2), which is attached to at least one first fastening bracket (4), connected directly or indirectly to the first vehicle part (33), so it is pivotable around a first pivot axis (6),
- a second holder (3), which is attached to at least one second fastening bracket (5), connected directly or indirectly to the second vehicle part (34) so it is pivotable around a second pivot axis (7),
**characterized in that** the flexible middle part (8) is attached to the first holder (2) so it is rotatable in relation to the first holder (2) and the following method steps are carried out:
- rotating the flexible middle part (8) like a pivoting door in relation to the first holder (2) in the direction of the second holder (3) until the flexible middle part (8) bridges a majority of the distance between the vehicle parts (33, 34);
- guiding together the flexible middle part (8) and the second holder (3) by pivoting at least the first holder (2) around the first pivot axis (6) in the direction of the second holder (3) until the flexible middle part (8) bridges the distance between the vehicle parts (33, 34);
- actuating at least one quick-action-closure connecting unit (21), by means of which the flexible middle part (8) is connected to the second holder (3), to hold the side wall panel (1) in a closed position.

21. A method for opening a side wall panel (1) for the inner side of a gangway between two vehicle parts (33, 34) articulated with one another during the decoupling of the two vehicle parts (33, 34), the side wall panel (1) comprising
- a flexible middle part (8), which can bulge,
- a first holder (2), which is attached to at least one first fastening bracket (4), connected directly or indirectly to the first vehicle part (33), so it is pivotable around a first pivot axis (6),
- a second holder (3), which is attached to at least one second fastening bracket (5), connected directly or indirectly to the second vehicle part (34) so it is pivotable around a second pivot axis (7),
**characterized in that** the flexible middle part (8) is attached to the first holder (2) so it is rotatable in relation to the first holder (2) and the following method steps are carried out:
- disengaging at least one quick-action-closure connecting unit (21), by means of which the flexible middle part (8) is connected to the second holder (3);
- disconnecting the connection between the flexible middle part (8) and the second holder (3);
- rotating the flexible middle part (8) like a pivoting door in relation to the first holder (2) in the direction of the first vehicle part (33).

## Revendications

1. Habillage de paroi latérale (1) pour l'intérieur d'une intercirculation entre deux parties de véhicule (33, 34) reliées l'une à l'autre de façon articulée, lequel habillage de paroi latérale (1) comprend
- une partie centrale flexible (8) capable de s'incurver,
- une première monture (2) qui est fixée avec possibilité de pivotement autour d'un premier axe de pivotement (6) sur au moins une première console de fixation (4),
- une deuxième monture (3), qui est fixée avec possibilité de pivotement autour d'un deuxième axe de pivotement (7) sur au moins une deuxième console de fixation (5),
dans lequel la partie centrale flexible (8) est disposée entre la première monture (2) et la deuxième (3) et fixée à la première monture (2) et à la deuxième (3) par ses parties d'extrémité tournées vers la première monture (2) et la deuxième (3),
**caractérisé en ce que** la fixation de la partie centrale flexible (8) à la première monture (2) et/ou à la deuxième (3) est conçue pour permettre sa rotation par rapport à la monture (2, 3) correspondante.

2. Habillage de paroi latérale (1) selon la revendication 1, **caractérisé en ce que** la liaison de la partie centrale flexible (8) à la première monture (2) est réalisée par un premier élément de liaison (9) capable de rotation autour d'un premier axe de rotation (11) et/ou **en ce que** la liaison de la partie centrale flexible (8) à la deuxième monture (3) est réalisée par un deuxième élément de liaison (10) capable de rotation autour d'un deuxième axe de rotation (12).

3. Habillage de paroi latérale (1) selon la revendication 2, **caractérisé en ce que** le premier élément de liaison (9) et le deuxième (10) présentent chacun une première partie de liaison (13a, 13b) pour la liaison à la première monture (2) ou à la deuxième (3) et une deuxième partie de liaison (14a, 14b) pour la liaison à la partie centrale flexible (8).

4. Habillage de paroi latérale (1) selon l'une des revendications 2 à 3, **caractérisé en ce qu'**au moins un élément de réception cylindrique (15a, 15b) est prévu sur la première monture (2) et sur la deuxième (3) et forme le premier axe de rotation (11) ou le deuxième (12).

5. Habillage de paroi latérale (1) selon la revendication 4, **caractérisé en ce que** la première partie de liaison (13a, 13b) présente au moins un élément de guidage (16a, 16b) en forme de douille qui est en liaison active avec l'au moins un élément de réception (15a, 15b) pour créer la possibilité de rotation du premier élément de liaison (9) ou du deuxième (10)
et **en ce que** l'élément de réception (15a, 15b) est fixé par au moins un élément de fixation (17a, 17b) en forme de douille à la première monture (2) ou à la deuxième (3).

6. Habillage de paroi latérale (1) selon l'une des revendications 4 à 5, **caractérisé en ce que** le premier élément de liaison (9) et le deuxième (10) sont disposés avec possibilité de translation sur la première monture (2) ou la deuxième (3), de préférence par le fait que l'au moins un élément de guidage (16a, 16b) est disposé avec possibilité de translation sur le premier axe de rotation (11) ou le deuxième (12) de l'élément de réception (15a, 15b).

7. Habillage de paroi latérale (1) selon l'une des revendications 2 à 6, **caractérisé en ce qu'**au moins un élément de ressort de positionnement (18a, 18b), agissant de préférence sur l'au moins un élément de guidage (16a, 16b), est prévu pour positionner le premier élément de liaison (9) ou le deuxième (10) le long du premier axe de rotation (11) ou du deuxième (12).

8. Habillage de paroi latérale (1) selon l'une des revendications 3 à 7, **caractérisé en ce que** la deuxième partie de liaison (14a, 14b) peut être reliée par au moins un dispositif de liaison à fermeture rapide (21) à la partie centrale flexible (8).

9. Habillage de paroi latérale (1) selon l'une des revendications 3 à 8, **caractérisé en ce que** la partie centrale flexible (8) comprend une plaque centrale flexible (26) et deux parties de raccordement (27, 28), l'une des parties de raccordement (27, 28) étant reliée à la deuxième partie de liaison (14a) du premier élément de liaison (9) et/ou l'autre partie de raccordement (27, 28) étant reliée à la deuxième partie de liaison (14b) du deuxième élément de liaison (10).

10. Habillage de paroi latérale (1) selon la revendication 9, **caractérisé en ce que** la partie centrale flexible (8) comprend une plaque en plastique flexible (50), laquelle plaque en plastique flexible (50) couvre au moins en partie, de préférence complètement, la face de la plaque centrale flexible (26) tournée à l'opposé des axes de pivotement (6, 7).

11. Habillage de paroi latérale (1) selon la revendication 10, **caractérisé en ce que** la plaque en plastique flexible (50) se compose de polycarbonate au moins partiellement transparent, de préférence transparent, et **en ce qu'**une plaque portant des informations (52), de préférence imprimée, est disposée entre la plaque centrale flexible (26) et la plaque en plastique flexible (50).

12. Habillage de paroi latérale (1) selon la revendication 10, **caractérisé en ce que** la plaque en plastique flexible (50) est fixée à la partie centrale flexible (8) au moyen d'un cadre de serrage (53) et d'un cadre de maintien (54), la plaque en plastique (50) étant serrée par le cadre de serrage (53) et retenue de façon relativement mobile dans le cadre de maintien (54) afin de compenser les mouvements relatifs de la plaque centrale flexible (26).

13. Habillage de paroi latérale (1) selon la revendication 12, **caractérisé en ce que** le cadre de serrage (53) est fixé sur l'une des parties de raccordement (27, 28) et le cadre de maintien (54) sur l'autre partie de raccordement (28, 27) de la partie centrale flexible (8).

14. Habillage de paroi latérale (1) selon la revendication 12 ou 13, **caractérisé en ce que** le cadre de serrage (53) et le cadre de maintien (54) présentent chacun sur son bord inférieur, vu dans la direction des axes de pivotement (6, 7), une butée pour la fixation de la plaque en plastique flexible (50).

15. Habillage de paroi latérale (1) selon l'une des revendications 1 à 14, **caractérisé en ce que** la première monture (2) et la deuxième monture (3) présentent sur leur bord supérieur et/ou inférieur, vu dans le sens des axes de pivotement (6, 7), une première couverture (30a, 30b) déformable élastiquement, afin de pouvoir absorber au moins partiellement, par la déformation de la première couverture (30a, 30b), un mouvement relatif entre les parties de véhicule (33, 34) parallèlement aux axes de pivotement (6, 7).

16. Habillage de paroi latérale (1) selon l'une des revendications 1 à 15, **caractérisé en ce que** la partie centrale flexible (8) présente, sur son bord supérieur et/ou inférieur, vu dans le sens des axes de pivotement (6, 7), une deuxième couverture (31a, 31b) déformable élastiquement, afin de pouvoir absorber au moins partiellement, par la déformation de la deuxième couverture (31a, 31b) un mouvement relatif entre les parties de véhicule (33, 34) parallèlement aux axes de pivotement (6, 7).

17. Habillage de paroi latérale (1) selon l'une des revendications 1 à 16, **caractérisé en ce qu'**il est prévu sur la partie centrale flexible (8) au moins un, de préférence trois câbles tendeurs (19) tendus transversalement par rapport aux axes de pivotement (6, 7) afin de permettre à la partie centrale flexible (8) de s'incurver, et **en ce que** la première monture (2) et la deuxième (3) sont soumises chacune à un couple de rotation par au moins un ressort de torsion (32a, 32b) afin de tendre la partie centrale flexible (8).

18. Système comprenant deux parties de véhicule (33, 34) reliées entre elles de façon articulée et une intercirculation disposée entre les parties de véhicule (33, 34), dans lequel est disposé sur la face intérieure de l'intercirculation un habillage de paroi latérale (1) selon l'une des revendications 1 à 17 et dans lequel la première monture (2) est reliée directement ou indirectement par l'au moins une première console de fixation (4) à l'une des parties de véhicule (33) et la deuxième monture (3) est reliée directement ou indirectement par l'au moins une deuxième console de fixation (5) à l'autre partie de véhicule (34).

19. Système selon la revendication 18, **caractérisé en ce qu'**un profilé en tôle (59) conformé comme une monture pour une brosse (60) destinée à couvrir un espace entre la monture (2, 3) et la partie de véhicule (33, 34) est fixé à la première partie de véhicule et/ou à la deuxième (33, 34) et **en ce que** le profilé en tôle (59) est muni d'une lampe (61).

20. Procédé pour la fermeture d'un habillage de paroi latérale (1) pour la face intérieure d'une intercirculation entre deux parties de véhicule (33, 34) reliées entre elles de façon articulée lors de l'accouplement des deux parties de véhicule (33, 34), l'habillage de paroi latérale (1) comprenant
- une partie centrale flexible (8) capable de s'incurver,
- une première monture (2) qui est fixée avec possibilité de pivotement autour d'un premier axe de pivotement (6) sur au moins une première console de fixation (4) reliée directement ou indirectement à la première partie de véhicule (33),
- une deuxième monture (3), qui est fixée avec possibilité de pivotement autour d'un deuxième axe de pivotement (7) sur au moins une deuxième console de fixation (5) reliée directement ou indirectement à la deuxième partie de véhicule (34),
**caractérisé en ce que** la partie centrale flexible (8) est fixée sur la première monture (2) avec possibilité de rotation par rapport à la première monture (2) et les étapes de procédé suivantes sont exécutées :
- rotation de la partie centrale flexible (8) à la manière d'une porte pivotante par rapport à la première monture (2) en direction de la deuxième monture (3), jusqu'à ce que la partie centrale flexible (8) couvre une grande partie de la distance entre les parties de véhicule (33, 34) ;
- rapprochement de la partie centrale flexible (8) et de la deuxième monture (3) par le pivotement au moins de la première monture (2) autour du premier axe de pivotement (6) en direction de la deuxième monture (3) jusqu'à ce que la partie centrale flexible (8) couvre la distance entre les parties de véhicule (33, 34) ;
- actionnement d'au moins un dispositif de liaison à fermeture rapide (21) au moyen duquel la partie centrale flexible (8) est reliée à la deuxième monture (3) afin de retenir l'habillage de paroi latérale (1) dans une position fermée.

21. Procédé pour la fermeture d'un habillage de paroi latérale (1) pour la face intérieure d'une intercirculation entre deux parties de véhicule (33, 34) reliées entre elles de façon articulée lors du découplage des deux parties de véhicule (33, 34), l'habillage de paroi latérale (1) comprenant
- une partie centrale flexible (8) capable de s'incurver,
- une première monture (2) qui est fixée avec possibilité de pivotement autour d'un premier axe de pivotement (6) sur au moins une première console de fixation (4) reliée directement ou indirectement à la première partie de véhicule (33),
- une deuxième monture (3), qui est fixée avec possibilité de pivotement autour d'un deuxième axe de pivotement (7) sur au moins une deuxième console de fixation (5) reliée directement ou indirectement à la deuxième partie de véhicule (34),
**caractérisé en ce que** la partie centrale flexible (8) est fixée sur la première monture (2) avec possibilité de rotation par rapport à la première monture (2) et les étapes de procédé suivantes sont exécutées :
- desserrage de l'au moins un dispositif de liaison à fermeture rapide (21) au moyen duquel la partie centrale flexible (8) est reliée à la deuxième monture (3) ;
- séparation de la partie centrale flexible (8) et de la deuxième monture (3) ;
- rotation de la partie centrale flexible (8) à la manière d'une porte pivotante par rapport à la première monture (2) en direction de la première partie de véhicule (33).
